# EUROPEAN PATENT SPECIFICATION

(11) **EP 2 597 331 B1**
(45) Date of publication and mention of the grant of the patent: **18.10.2017**
(21) Application number: 11809599.1
(22) Date of filing: 14.07.2011
(51) Int. Cl.: F16F 15/134, F16D 13/64

(54) **TORQUE FLUCTUATION ABSORBING DEVICE**
VORRICHTUNG ZUR DÄMPFUNG EINER DREHMOMENTSCHWANKUNG
DISPOSITIF D'ABSORPTION DE FLUCTUATION DE COUPLE

(30) Priority: 24.09.2010 JP 2010214348; 21.07.2010 JP 2010163599
(43) Date of publication of application: 29.05.2013
(73) Proprietor: Aisin Seiki Kabushiki Kaisha, Aichi 448-8650 (JP)
(72) Inventor: SEKINE, Tsutomu, Kariya-shi Aichi 448-8650 (JP); MIYAMACHI, Yoshihiro, Kariya-shi Aichi 448-8650 (JP); NAGATO, Tomohiro, Kariya-shi Aichi 448-8650 (JP); TSURUHASHI, Kazuyuki, Kariya-shi Aichi 448-8650 (JP); NAKAGAWA, Soji, Kariya-shi Aichi 448-8650 (JP); TAKASHI, Yukihisa, Kariya-shi Aichi 448-8650 (JP)
(74) Representative: Kramer Barske Schmidtchen Patentanwälte PartG mbB
(86) International application number: PCT/JP2011/066072
(87) International publication number: WO 2012/011428

(56) References cited:
- EP-A2- 0 361 458
- DE-A1- 19 727 078
- GB-A- 2 167 526
- GB-A- 2 318 620
- JP-A- 9 100 842
- JP-A- 60 081 520
- JP-A- 2000 310 283
- JP-A- 2006 144 884
- JP-A- 2009 133 378

## Description

### TECHNICAL FIELD

### (Cross-Reference to Related Application)

The present application asserts priority rights based on JP Patent Application 2010-214348 filed in Japan on 24 September, 2010 and on JP Patent Application 2010-163599 filed in Japan on 21 July, 2010. The total contents of disclosure of the Patent Applications of the senior filing dates are to be incorporated by reference into the present Application.

This invention relates to a torque fluctuation absorbing device that absorbs torque fluctuations between two axes of rotations.

This invention relates to a torsion damper device that buffers torsion between two rotary members and more specifically to a torsion damper device suitable for broadening torsion angle.

It is observed that the torsion damper device is synonymous as the torque fluctuation absorbing device.

### BACKGROUND

In a hybrid vehicle, for example, the torque fluctuation absorbing device is provided on a motive power transmitting path between an engine and a motor generator (or the speed-change transmission) to absorb or suppress fluctuations in the torque produced between the engine and the motor generator (or the speed-change transmission). Among torque fluctuation absorbing devices, there are ones usually provided with a damper unit(s) that absorbs fluctuations in the torque by the force of elasticity, a hysteresis unit that absorbs or suppresses fluctuations in the torque by friction or the like, and a limiter unit that produces slip in case the fluctuations can no longer be absorbed by the damper unit(s) or the hysteresis unit. Patent Literatures 1, 2 show a torque fluctuation absorbing device of the conventional technique in which there are provided a plurality of independent damper units to provide for a greater torsion angle in a damper portion.

### CITATION LIST

### PATENT LITERATURE

Patent Literature 1:
   JP Patent Kokai Publication No. JP2009-293652A (Figs.9 to 12)
Patent Literature 2:
   JP Patent Kokai Publication No. JP2010-38312A
Patent Literature 3:
   JP Patent Kokai Publication No. JP-H08-42591A
Patent Literature 4:
   JP Patent Kokai Publication No. JP-H08-42594A
Patent Literature 5:
   DE (Offenlegungsschrift) No. 19753557A

Furthermore, EP 0 361 458 A2 discloses a clutch disk assembly comprising a hub member connected with an output shaft; a disk member coaxially and rotatably mounted to said hub member and connected to an input shaft; a hysteresis mechanism connected between said hub member, a spring member and said disk member and including a plate member, a spring member and a friction lining member, said plate member provided with a recess of constant axial length in which said spring member is positioned; a cam face formed on one of said plate member and said spring member; a projection formed on said one of said spring member and plate member and slidably contacting with said cam face of said one of said plate member and said spring member; an engaging mechanism provided between said plate member and said hub member, and said hysteresis mechanism generating a continuous variable hysteresis torque through a predetermined torosional angle when said hub member and said disk member move relative to one another.

Furthermore, GB 2 318 620 A, DE 197 27 078 A1 and GB 2 167 526 A disclose further coupling devices comprising one or more dampers.

### SUMMARY

### TECHNICAL PROBLEM

The entire contents of the disclosures of the above Patent Literatures 1 to 5 are incorporated by reference herein. The following analysis is made by the present invention.
If, in the torque fluctuation absorbing device of the conventional technique, a plurality of the damper units are simply arranged offset in the radial direction, the radial dimension of the device is increased. If, in order to avoid increase in the radial dimension, a plurality of the dampers are arranged axially offset from one another, the axial dimension of the device is increased.

It is a principal object of the present invention to provide a torque fluctuation absorbing device including a plurality of damper units by means of which it is possible to suppress increase in the radial dimension as well as the axial dimension of the device.

### SOLUTION TO PROBLEM

In one aspect of the present invention, there is provided a torque fluctuation absorbing device including a first damper unit(s) that absorbs torque fluctuations caused by torsion between a first rotary member and a second rotary member, and a second damper unit(s) that absorbs torque fluctuations caused by torsion between the second rotary member and a third rotary member. The first damper unit(s) includes a plurality of first coil springs arranged at a first predetermined spacing along a circumferential direction. The first damper unit(s) absorbs torsion between the first and second rotary members by the plurality of the first coil springs. The second damper unit(s) is arranged more radially inwardly than the first damper unit(s), and includes a plurality of second coil springs arranged at a second predetermined spacing along the circumferential direction. The second damper unit absorbs torsion between the second and third rotary members by the plurality of the second coil springs. Positions of the plurality of the first coil springs are offset a predetermined angle along the circumferential direction from positions of the plurality of the second coil springs. The torque fluctuation absorbing device further comprises: a first hysteresis unit that absorbs torque fluctuations caused due to torsion between the first and second rotary members. The second rotary member is arranged on both sides axially of the first rotary member. The first hysteresis unit includes a plurality of thrust members periodically arranged divided at a plurality of sites on a circumference of a same circle as the first damper unit(s); the thrust members being disposed circumferentially offset from the first coil springs in the first damper unit(s); the plurality of the thrust members being arranged between the first and second rotary members and being locked against rotation relative to the second rotary member; the thrust members being biased towards the first rotary member under spring action of the second rotary member. The first rotary member is slidably clamped by the plurality of the thrust members.

In the torque fluctuation absorbing device according to the present invention, preferably the first damper unit(s) includes two or three of the first coil springs, and the second damper unit(s) includes two or three of the second coil springs.

In the torque fluctuation absorbing device according to the present invention, preferably the first damper unit(s) includes three of the first coil springs, while the second damper unit(s) includes three of the second coil springs. Preferably, the three first coil springs are arranged offset at an angle of 120° from one another about an axis of rotation as center, the three second coil springs are arranged offset at an angle of 120° from one another about the axis of rotation as center, and the second coil springs are arranged offset at an angle of 60° from the first coil springs about the axis of rotation as center.

In the torque fluctuation absorbing device according to the present invention, preferably the second coil springs are arranged between neighboring ones of the first coil springs more radially inwardly than the first coil springs.

In the torque fluctuation absorbing device according to the present invention, the second coil springs are greater in diameter than the first coil springs.

In the torque fluctuation absorbing device according to the present invention, the second coil springs are heavier in weight than the first coil springs.

The torque fluctuation absorbing device according to the present invention preferably further includes a stopper unit(s) that inhibits excess torsion of both the first and second damper units, with the stopper unit(s) being fastened to the second rotary member. The first rotary member includes a first protuberance that is formed radially inwardly and that can abut against a circumferential end face of the stopper unit under the torsion between the first and second rotary members. The third rotary member includes a second protuberance that is formed radially outwardly and that can abut against a circumferential end face of the stopper unit due to torsion between the third and second rotary members at a site disposed more radially inwardly than the first protuberance.

In the torque fluctuation absorbing device according the present invention, preferably the stopper unit(s) is periodically arranged as it is divided at a plurality of sites on the circumference of the same circle as the first damper unit(s), with the stopper unit(s) being arranged circumferentially offset from the first coil springs in the first damper unit(s).

In the torque fluctuation absorbing device according to the present invention, preferably the stopper unit(s) is disposed more radially inwardly than the thrust member.

The torque fluctuation absorbing device according to the present invention preferably further includes a limiter unit that produces slip at least when the first and second damper units can no longer absorb the torque fluctuations. The limiter unit includes two friction members fastened to both sides of the first rotary member, a cover plate slidably pressure-contacted with one of the friction members, a pressure plate slidably pressure-contacted with the other of the friction members, a Belleville spring (conical annular spring) that biases the pressure plate towards the cover plate, a support plate that carries the Belleville spring and a rivet(s) that interconnects the cover plate and the support plate. The pressure plate includes a third protuberance extending from its outer peripheral end face towards an outer peripheral side, with one or both of the cover plate and the support plate including a cutout axially movably and relatively non-rotatably engaging with the third protuberance.

In the torque fluctuation absorbing device according to the present invention, the first damper unit includes a first coil spring(s) and a third coil spring(s) differing in length from each other. The first coil spring(s) and the third coil spring(s) are alternately arranged along the circumferential direction of the first damper unit(s). The first coil spring(s) and the third coil spring(s) buffer the torsion between the first rotary member and the second rotary member. The third coil spring(s) is shorter in length than the first coil spring(s). With respect to the radial direction of the first damper unit(s), a portion of the third coil spring(s) disposed inwardly is disposed more radially outwardly of the first damper unit than a portion of the first coil spring(s) disposed inwardly. With respect to the circumferential direction of the second damper unit(s), the second coil spring(s) is disposed between the first coil spring(s) and the third coil spring(s) neighboring to each other, with the second coil spring(s) being disposed more radially inwardly of the first damper unit(s) than the first coil spring(s) and the third coil spring(s). Furthermore, the torque fluctuation absorbing device according to the present invention includes a first pair seat members arranged at both longitudinal ends of the third coil spring(s), with the first pair seat members being retained by one of the first and second rotary members in case of occurrence of torsion between the first and second rotary members. The torque fluctuation absorbing device also includes an elastic member disposed inside the third coil spring(s). The elastic member allows torsion between the first and second rotary members until abutment thereof with the first pair seat members in case of occurrence of torsion between the first and second rotary members.

In the torque fluctuation absorbing device according to the present invention, preferably the second damper unit(s) includes four of the second coil springs, the first damper unit(s) includes two of the first coil springs and two of the third coil springs, and the two first coil springs are arranged offset 180° relative to one another about the axis of rotation as center. The two third coil springs are arranged offset 180° relative to one another about the axis of rotation as center, and the first coil springs are arranged offset by 90° from the third coil springs about the axis of rotation as center.

In the torque fluctuation absorbing device according to the present invention, preferably the second rotary member includes a ring member carrying the second coil spring(s) and a flange member engaging with the ring member, with the third rotary member including a plate member detachably engaged with the second coil spring(s).

In the torque fluctuation absorbing device according to the present invention, preferably the second coil springs are arranged between the ring member and the plate member.

The torque fluctuation absorbing device according to the present invention preferably further includes a pair of second seat members arranged on both ends of the first coil spring(s), with the second seat members being retained by one out of the first rotary member and the second rotary member when torsion has occurred between the first and second rotary members. Each second seat member includes a protuberance extending into the inside of the first coil spring(s). In case of occurrence of torsion between the first and second rotary members, the torsion is allowed between the first and second rotary members until the protuberances abut against each other.

In the torque fluctuation absorbing device according to the present invention, preferably the plurality of the second coil springs are each formed of a 21st coil spring(s) and a 22nd coil spring(s) differing in length from each other, with the 22nd coil spring(s) being shorter in length than the 21st coil spring(s). In the second damper unit(s), just the 21st coil spring(s) is in operation for initial torsion between the second and third rotary members and, for later torsion between the second and third rotary members, the 21st coil spring(s) and 22nd coil spring(s) are in operation.

In the torsion absorbing device according to the present invention, the second coil spring(s) extends linearly with respect to a longitudinal direction of the second coil spring(s).

In a second aspect of the present invention, there is provided a torsion damper device including a substantially annular first damper unit(s) that buffers torsion between a first rotary member and a second rotary member, and a substantially annular second damper unit(s) that buffers torsion between a third rotary member and a fourth rotary member. The third rotary member is rotated in unison with the second rotary member. The first damper unit(s) includes a plurality of first coil springs which are arranged along a circumference of the first damper unit(s). The first coil springs absorb torsion between the first and second rotary members. The second damper unit(s) includes a second coil spring(s) and a third coil spring(s) differing in length from each other. The second coil spring(s) and the third coil spring(s) are alternatively arranged along the circumference of the second damper unit(s), and act to buffer torsion between the third and fourth rotary members. The third coil spring(s) is shorter in length than the second coil spring(s) and is disposed radially more outwardly of the second damper unit(s) than the second coil spring(s). With respect to the circumferential direction of the first damper unit(s), the first coil spring(s) is disposed between neighboring second and third coil spring(s), and more radially inwardly of the second damper unit(s) than the second or third coil spring(s).

In the torsion damper device of the present invention, the first damper unit(s) includes four of the first coil springs, while the second damper unit(s) includes two of the second coil springs and two of the third coil springs. The two second coil springs are arranged offset by 180° from each other about the axis of rotation as center, while the two third coil springs are arranged offset by 180° from each other about the axis of rotation as center. The second coil springs are arranged offset by 90° from the third coil springs about the axis of rotation as center.

The torsion damper device of the present invention preferably includes a fifth rotary member that is run in rotation in unison with the first rotary member and that is engaged with the third rotary member such as to allow for torsion within a predetermined angle with respect to the third rotary member.

The torsion damper device according to the present invention preferably further includes pair seat members arranged on both ends of the second coil spring, with the seat members being retained by one out of the third rotary member and the fourth rotary member when torsion has occurred between the third and fourth rotary members. Each seat member includes a protuberance extending into the inside of the second coil spring(s). In case of the occurrence of torsion between the third and fourth rotary members, the torsion is allowed between the third and fourth rotary members until the protuberances abut against each other.

The torsion damper device according to the present invention preferably further includes pair other seat members arranged at both longitudinal ends of the third coil spring, with the other seat members being retained by one of the third and fourth rotary members in case of occurrence of torsion between the third and fourth rotary members, and an elastic member disposed inside the third coil spring(s). The elastic member allows for torsion between the third and fourth rotary members until it abuts against pair other seat members in case of the occurrence of torsion between the third and fourth rotary members.

In the torsion damper device according to the present invention, preferably the plurality of the second coil springs are a eleventh coil spring(s) and a twelfth coil spring(s) differing in length from each other, with the twelfth coil spring(s) being shorter in length than the eleventh coil spring(s). In the first damper unit(s), just the eleventh coil spring(s) is in operation for an initial torsion between the first and second rotary members and, for a later torsion between the first and second rotary members, the eleventh coil spring(s) and twelfth coil spring(s) are in operation.

In the torsion damper device of the present invention, the first coil spring(s) preferably is extended linearly with respect to the longitudinal direction of the first coil spring(s).

In a third aspect of the present invention, there is provided a torque fluctuation absorbing device including a first damper unit(s) that absorbs torque fluctuations caused by torsion between a first rotary member and a second rotary member, and a second damper unit(s) that absorbs torque fluctuations caused by torsion between the second rotary member and a third rotary member. The first damper unit(s) includes a plurality of first coil springs periodically arranged along a circumferential direction. The first damper unit buffers torsion between the first and second rotary members by the plurality of the first coil springs. The second damper unit(s) is arranged more radially inwardly than the first damper unit(s), and includes a plurality of second coil springs periodically arranged along the circumferential direction. The second damper unit(s) absorbs torsion between the second and third rotary members by the plurality of the second coil springs. Periodic positions of the plurality of the first coil springs are offset a predetermined angle from periodic positions of the plurality of the second coil springs.

In the torque fluctuation absorbing device according to the present invention, preferably the first damper unit(s) includes two or three of the first coil springs, and the second damper unit(s) includes two or three of the second coil springs.

In the torque fluctuation absorbing device according to the present invention, preferably the first damper unit(s) includes three of the first coil springs, while the second damper unit(s) includes three of the second coil springs. Preferably, the three first coil springs are arranged offset at an angle of 120° from one another about an axis of rotation as center, while the three second coil springs are arranged offset at an angle of 120° from one another about the axis of rotation as center. The second coil springs are arranged offset at an angle of 60° from the first coil springs about the axis of rotation as center.

In the torque fluctuation absorbing device according to the present invention, preferably the second coil springs are arranged between the neighboring ones of the first coil springs more radially inwardly than the first coil springs.

In the torque fluctuation absorbing device according to the present invention, the second coil springs are greater in diameter than the first coil springs.

In the torque fluctuation absorbing device according to the present invention, the second coil springs are heavier in weight than the first coil springs.

The torque fluctuation absorbing device according to the present invention preferably further includes a first hysteresis unit that absorbs torque fluctuations caused due to torsion between the first and second rotary members. The second rotary member is arranged on both sides axially of the first rotary member. The first hysteresis unit includes a plurality of thrust members that are periodically separately arranged at a plurality of sites on the circumference of the same circle as the first damper unit(s) and that are disposed circumferentially offset from the first coil springs in the first damper unit(s). A plurality of the thrust members are arranged between the first and second rotary members and locked against rotation relative to the second rotary member. The thrust members are biased towards the first rotary member under a spring action of the second rotary member. The first rotary member is slidably clamped by the plurality of the thrust members.

The torque fluctuation absorbing device according to the present invention preferably further includes a stopper unit that inhibits excess torsion of both the first and second damper units, with the stopper unit being fastened to the second rotary member. The first rotary member includes a first protuberance that is formed radially inwardly and that can abut against a circumferential end face of the stopper unit under torsion between the first and second rotary members. The third rotary member includes a second protuberance that is formed radially outwardly and that can abut against a circumferential end face of the stopper unit due to torsion between the third and second rotary members at a site disposed more radially inwardly than the first protuberance.

In the torque fluctuation absorbing device according the present invention, preferably the stopper unit(s) is periodically arranged as it is divided and placed at a plurality of sites on the circumference of the same circle as the first damper unit(s), with the stopper unit(s) being arranged circumferentially offset from the first coil springs in the first damper unit.

In the torque fluctuation absorbing device according to the present invention, preferably the stopper unit(s) is disposed more radially inwardly than the thrust member.

The torque fluctuation absorbing device according to the present invention preferably further includes a limiter unit that produces slip at least when the first and second damper units can no longer absorb the torque fluctuations. The limiter unit includes two friction members fastened to both sides of the first rotary member, a cover plate slidably pressure-contacted with one of the friction members, a pressure plate slidably pressure-contacted with the other of the friction members, a Belleville spring that biases the pressure plate towards the cover plate, a support plate that carries the Belleville spring and a rivet(s) that interconnects the cover plate and the support plate. The pressure plate includes a third protuberance that extends from its outer peripheral end face towards an outer peripheral side, with one or both of the cover plate and the support plate including a cutout axially movably and relatively non-rotatably engaging with the third protuberance.

### ADVANTAGEOUS EFFECTS OF INVENTION

In the first aspect of the present invention, the position of the coil spring(s) of the first damper unit(s) is offset a predetermined angle from the position of the coil spring(s) of the second damper unit(s)t. Hence, the first damper unit(s) may be arranged offset to a radially inner side. It is thus possible not to increase the dimension in the radial and axial directions of the device.

In the second aspect of the present invention, the third coil spring(s) may be shorter in length than the second coil spring(s), in the second damper unit, and the third coil spring(s) may be arranged more radially outwardly than the second coil spring(s). Since this enlarges the area (or space) delimited between the neighboring third and second coil springs and lying more inwardly than the third and second coil springs, it becomes possible to set a longer length of the first coil spring(s) of the first damper unit(s). The torsion angle of the first damper unit(s) may thus be increased, while the first damper unit(s) may be decreased in toughness, just with the use of a straight-shaped coil spring(s) without using an arcuately shaped coil spring(s) of the conventional technique. It is also possible to suppress deterioration of the attenuation performance caused by the slide resistance between the first coil spring and the second rotary member. Moreover, the degree of design freedom of the torsion characteristic of the first damper unit is excellent to advantage from the designing point of view.

In the third aspect of the present invention, the periodic position(s) of the coil spring(s) of the first damper unit is offset a predetermined angle from the periodic position(s) of the coil spring(s) of the second damper unit. This enables the first damper unit(s) to be positioned offset radially inwardly, so that it becomes possible not to increase the dimension of the device in the radial direction as the torsion angle by the first and second damper units is maintained.

### BRIEF DESCRIPTION OF THE DRAWINGS

Fig.1 is a plan view, partially cut away, schematically showing an arrangement of a torsion damper device according to Example 1 of the present invention, looking from the axial direction.
Fig.2 is a schematic cross-sectional view taken along line X-X' of Fig.1, showing an arrangement of the torsion damper device according to Example 1 of the present invention.
Fig.3 is a schematic cross-sectional view taken along line Y-Y' of Fig.1, showing an arrangement of the torsion damper device according to Example 1 of the present invention.
Figs.4(A) and 4(B) are schematic views for illustrating the operation of a pre-damper unit in the torsion damper device of Example 1 of the present invention, where Fig.4(A) shows the state of the device before torsion and Fig.4(B) shows its state after torsion.
Figs.5(A) and 5(B) are schematic views for illustrating the operation of a main damper unit in the torsion damper device of Example 1 of the present invention, where Fig.4(A) shows the state of the device before torsion and Fig.4(B) shows its state after torsion.
Fig.6 is a graph schematically showing torque characteristics against the torsion angle of the torsion damper devices of Example 1 and Reference Example.
Fig.7 is a schematic plan view showing a method for producing a Belleville spring in the torsion damper device of Example 1 of the present invention.
Fig.8 is a schematic plan view showing a modification of the method for producing a Belleville spring in the torsion damper device of Example 1 of the present invention.
Fig.9 is a plan view, partially cut away, schematically showing an arrangement of a torque fluctuation absorbing device according to Example 2 of the present invention.
Fig.10 is a schematic cross-sectional view taken along line X-X' of Fig.9, showing an arrangement of the torque fluctuation absorbing device according to Example 2 of the present invention.

### MODES FOR CARRYING OUT THE INVENTION

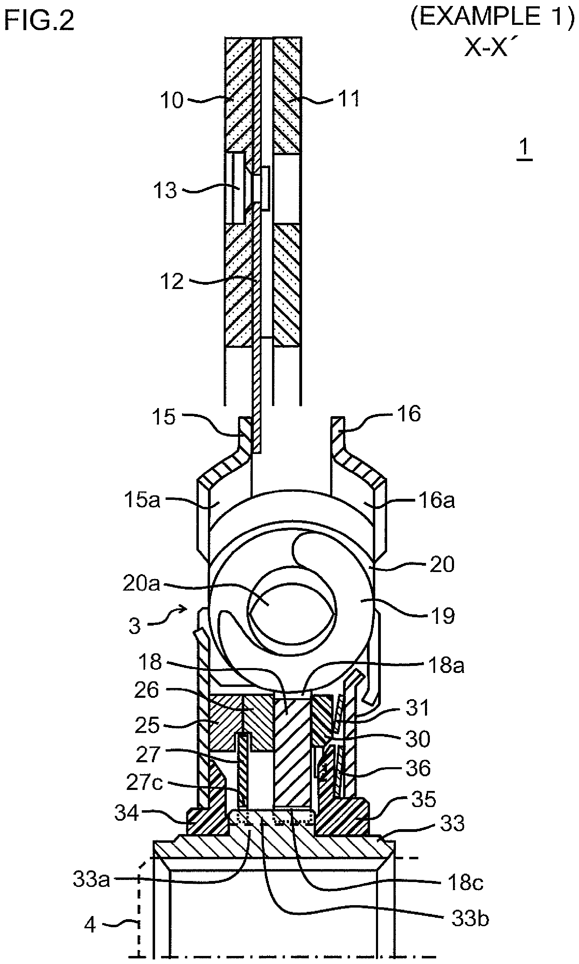

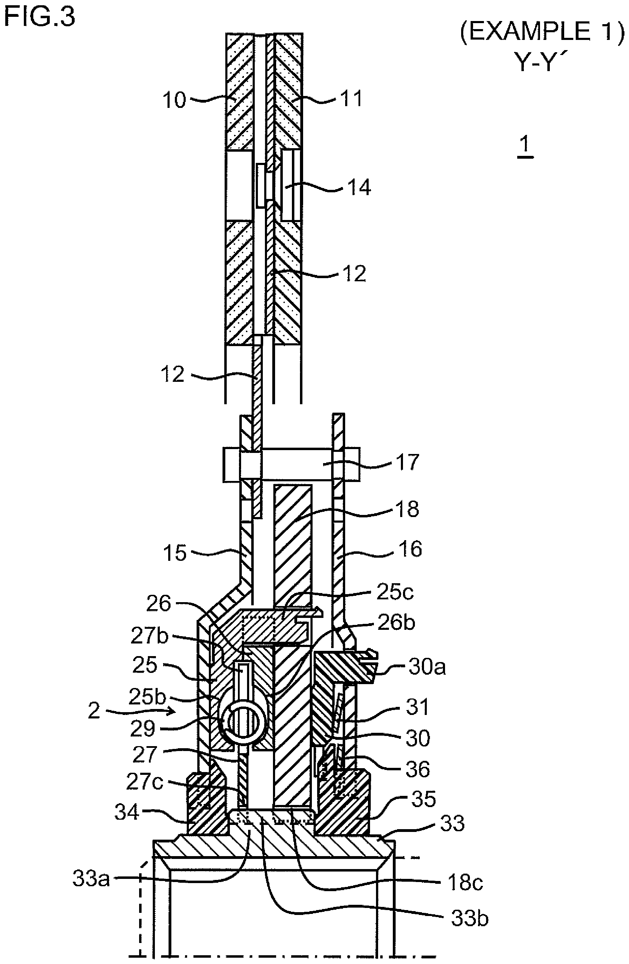

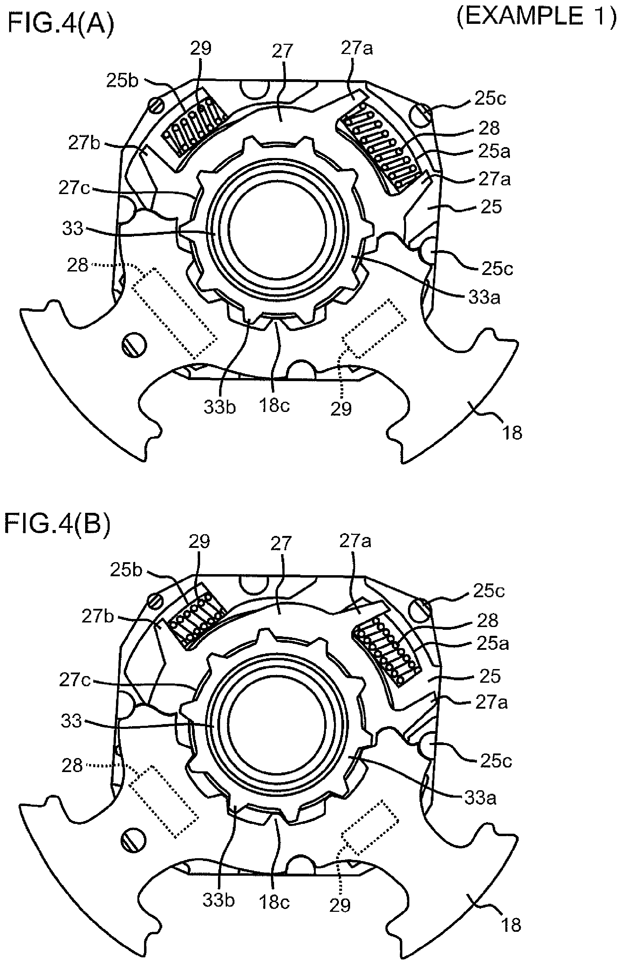

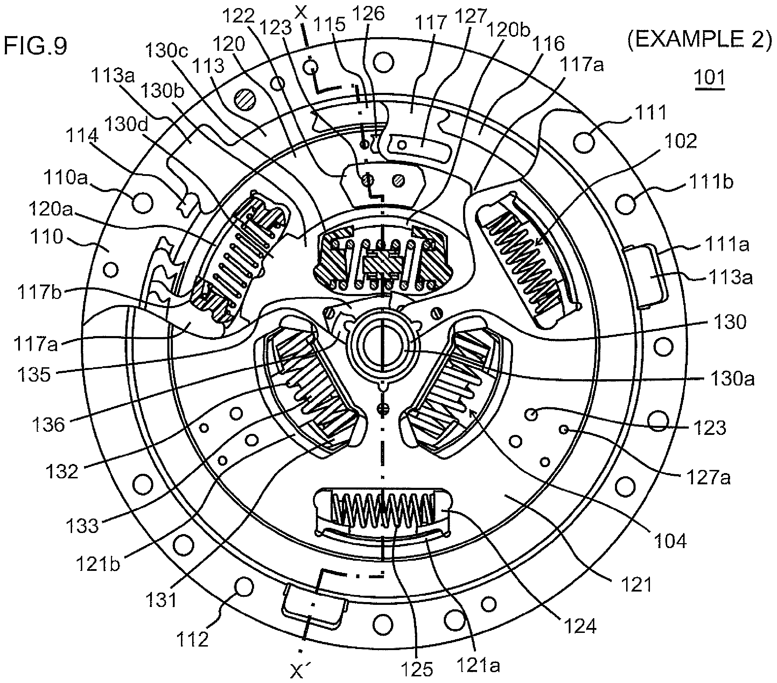

A torque fluctuation absorbing device according to an exemplary embodiment 1 of the present invention includes a first damper unit (102 of Fig.9 and 3 of Fig.2) that absorbs torque fluctuations caused by torsion between a first rotary member (117 of Fig.9 and 15, 16 of Figs.2 and 3) and a second rotary member (120, 121 of Fig.9 and 18, 25, 26 of Figs.2 and 3), and a second damper unit (104 of Fig.9 and 2 of Fig.3) that absorbs torque fluctuations caused by torsion between the second rotary member (120, 121 of Fig.9 and 18, 25, 26 of Figs.2 and 3) and a third rotary member (130 of Fig.9 and 27 of Figs.2 and 3). The first damper unit includes a plurality of first coil springs (125 of Fig.9 and 19 of Fig.2) arranged at a first predetermined spacing along a circumferential direction. The first damper unit absorbs torsion between the first and second rotary members by the plurality of the first coil springs. The second damper unit(s) is arranged more radially inwardly than the first damper unit(s), and includes a plurality of second coil springs (132 of Fig.9 and 28, 29 of Figs.3 and 4) arranged at a second predetermined spacing along the circumferential direction. The second damper unit buffers the torsion between the second and third rotary members by the plurality of the second coil springs. Positions of the plurality of the first coil springs are offset a predetermined angle along the circumferential direction from positions of the plurality of the second coil springs. The torque fluctuation absorbing device further comprises: a first hysteresis unit that absorbs torque fluctuations caused due to torsion between the first and second rotary members. The second rotary member is arranged on both sides axially of the first rotary member. The first hysteresis unit includes a plurality of thrust members periodically arranged divided at a plurality of sites on a circumference of a same circle as the first damper unit(s); the thrust members being disposed circumferentially offset from the first coil springs in the first damper unit(s); the plurality of the thrust members being arranged between the first and second rotary members and being locked against rotation relative to the second rotary member; the thrust members being biased towards the first rotary member under spring action of the second rotary member. The first rotary member is slidably clamped by the plurality of the thrust members.

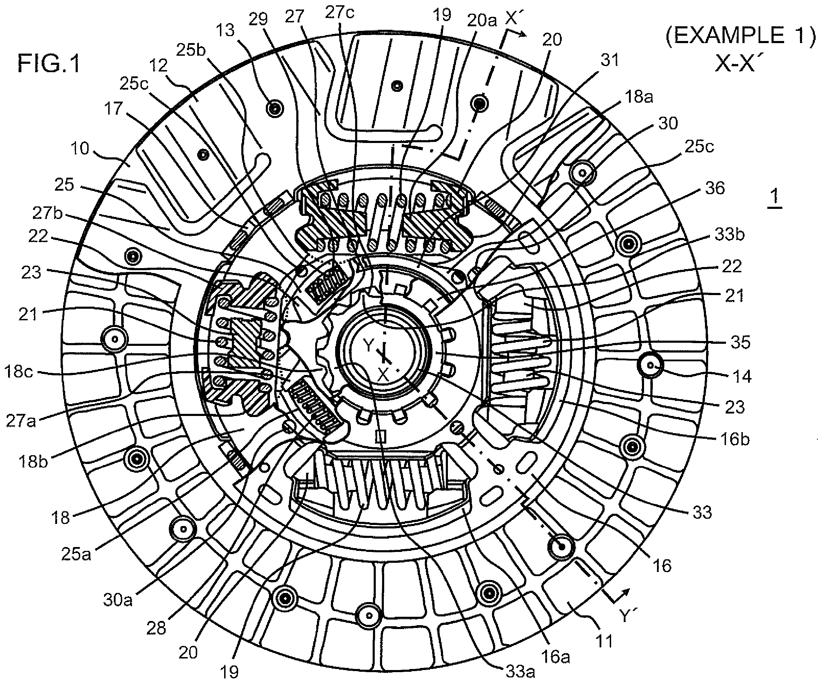

A torsion absorbing device (1 of Figs.1 to 3) according to an exemplary embodiment 2 of the present invention includes a substantially annular first damper unit (2 of Figs.1 to 3) that buffers torsion between a first rotary member (27 of Figs.1 to 3) and a second rotary member (25, 26 of Figs.1 to 3), and a substantially annular second damper unit (3 of Figs.1 to 3) that buffers torsion between a third rotary member (18 of Figs.1 to 3) and a fourth rotary member (15, 16 of Figs.1 to 3). The third rotary member is rotated in unison with the second rotary member. The first damper unit includes a plurality of first coil springs (28, 29 of Figs.1 to 3) arranged along the circumference of the first damper unit. The first coil springs buffer the torsion between the first and second rotary members. The second damper unit includes a second coil spring (19 of Figs.1 to 3) and a third coil spring (21 of Figs.1 to 3) differing in length from each other. The second coil spring and the third coil spring are alternatively arranged along the circumference of the second damper unit, and operate to buffer the torsion between the third and fourth rotary members. The third coil spring(s) is shorter in length than the second coil spring(s) and is disposed radially more outwardly of the second damper unit(s) than the second coil spring(s). With respect to the circumferential direction of the first damper unit(s), the first coil spring(s) is disposed between neighboring second and third coil spring(s), and is disposed more radially inwardly of the second damper unit(s) than the second or third coil spring(s).

A torque fluctuation absorbing device according to an exemplary embodiment 3 of the present invention includes a first damper unit (2 of Fig.9) that absorbs torque fluctuations caused by torsion between a first rotary member (117 of Fig.9) and a second rotary member (120, 121 of Fig.9) and a second damper unit(s) (104 of Fig.9) that absorbs torque fluctuations caused by torsion between the second rotary member (120, 121 of Fig.9) and a third rotary member (130 of Fig.9). The first damper unit includes a plurality of first coil springs (125 of Fig.9) periodically arranged along a circumferential direction. The first damper unit(s) buffers the torsion between the first and second rotary members by the plurality of the first coil springs. The second damper unit(s) is arranged more radially inwardly than the first damper unit(s), and includes a plurality of second coil springs (132 of Fig.9) periodically arranged along the circumferential direction. The second damper unit(s) buffers the torsion between the second and third rotary members by the plurality of the second coil springs. Periodic positions of the plurality of the first coil springs are offset a predetermined angle from periodic positions of the plurality of the second coil springs.

It is observed that signs for referring to the drawings used in the present Application are mainly for assisting the understanding and are not intended to limit the present invention to the particular mode(s) shown in the drawings.

### EXAMPLE 1

The torsion damper device according to Example 1 of the present invention will now be described with reference to the drawings. Fig.1 depicts a plan view, partially cut away, and schematically showing an arrangement of the torsion damper device according to Example 1 of the present invention, looking from the axial direction. Fig.2 depicts a cross-sectional view, taken along line X-X' in Fig.1, and schematically shows the arrangement of the torsion damper device according to Example 1 of the present invention. Fig.3 depicts a cross-sectional view, taken along line Y-Y' in Fig.1, and schematically shows the arrangement of the torsion damper device according to Example 1 of the present invention.

A torsion damper device 1 of Figs.1 to 3 represents an application of the present invention to a clutch disc in a clutch device. The torsion damper device 1 is provided in a clutch device disposed on a motive power transmission path between a crankshaft, not shown, of an engine and an input shaft (4 of Fig.2) of a speed-change transmission. The torsion damper device operates to buffer the torsion between a crankshaft and an input shaft (4 of Fig.2) to absorb or suppress torque fluctuations between the crankshaft and the input shaft (4 of Fig.2). The torsion damper device 1 has its facings 10, 11 disposed between a pressure plate and a flywheel in the clutch device for connection or disconnection to or from the pressure plate or the flywheel. The torsion damper device 1 includes damper units (2 and 3 in Fig.2) that absorb torque fluctuations under spring force. These damper units (2 and 3 in Fig.2) are a pre-damper unit(s) 2 that buffers initial torsion between the crankshaft and the input shaft (4 of Fig.2) and a main damper unit(s) 3 that buffers the torsion between the crankshaft and the input shaft (4 of Fig.2) when the torsion can no longer be buffered by the pre-damper unit(s) 2. Each of the pre-damper unit 2 and the main damper unit 3 is substantially annular or toroidal in shape.

The torsion damper device 1 is mainly composed by the facings 10, 11, a disc spring 12, rivets 13, 14, side plates 15, 16, a connection member 17, a flange member 18, a coil spring(s) 19, a seat member(s) 20 (referred to as second seat member(s) in the claims), a coil spring(s) 21, a seat member(s) 22 (referred to as first seat member(s) in the claims), an elastic member(s) 23, ring members 25, 26, a plate member 27, coil springs 28, 29, a thrust member 30, a Belleville spring 31 (annular conical spring), a hub member 33, thrust members 34, 35 and a Belleville spring 36.

The facing 10 is a friction member capable of frictionally engaging with a flywheel driven in rotation in unison with an engine crankshaft, not shown. The facing may, however, frictionally engage with a member other than the flywheel. The facing 10 is annular in shape and is fastened by a plurality of rivets 13 to one surface on axially one side, which is a left-side surface in Fig.2, of the disc spring 12 (see Fig.2). The facing 10 may be formed of or contain rubber, resin, fibers (short or long filaments) or particles to adjust the frictional coefficient *µ*.

The facing 11 is a friction member capable of frictionally engaging with a pressure plate driven in rotation in unison with the engine crankshaft, not shown. The facing 11 is annular or toroidally-shaped and fastened to the other axial surface (right-hand side surface in Fig.3) of the disc spring 12 by a plurality of rivets 14 (see Fig.3). The facing 10 may be formed of or contain rubber, resin, fibers (short or long filaments) or particles to adjust the frictional coefficient *µ*.

The disc spring 12 is annular and disc-shaped and exhibits elasticity with respect to thrusting against its disc surface. Both outer peripheral surfaces of the facings 10, 11 are fastened to the disc spring 12 by rivets 13, 14. The inner peripheral parts of the disc spring 12 are caulked, along with the side plate 15, to one ends of a plurality of connection members 17. The disc spring 12 rotates in unison with the side plates 15, 16.

The rivet 13 is a member for fastening the facing 10 to one surface on axially one side (left hand side surface in Fig.2) of the disc spring 12, while the rivet 14 is a member for fastening the facing 11 to the other surface on axially the other side (right hand side surface in Fig.2) of the disc spring 12.

The side plate 15 is an annular member mounted spaced apart from a flange member 18 on one surface on axially one side (left hand side in Figs.2 and 3) of the flange member 18. The side plate 15 is caulked, in the vicinity of its outer rim part, to one ends of the connection members 17 along with the disc spring 12. The side plate 15 is rotatable in unison with the disc spring 12 and the side plate 16. The side plate 15 includes, in its mid part where there is the main damper(s) 3, two windows 15a in which to accommodate the coil springs 19 and the two seat members 20, and two other windows, not shown, in which to accommodate the coil springs 21, two seat members 22 and the elastic members 23. The circumferential end face(s) of the window 15a is detachably contacted with the seat member(s) 20. The window 15a holds the seat member 20 when its circumferential end face is in contact with the seat member 20. When the seat member 20 is detached from the circumferential end face, the window 15a guides the seat member 20 so that the seat member will be moved in the circumferential direction (or in the direction of expansion/ compression of the coil spring 19). The two windows 15a are arranged offset 180° from each other about the center axis of rotation of the side plate 15 as center. The circumferential end faces of the other windows, not shown, are detachably contacted with the seat members 22. The window, not shown, holds the seat member 22 when its circumferential end face is in contact with the seat member 22. When the seat member 22 is detached from the circumferential end face, the window guides the seat member 22 so that the seat member will be moved in the circumferential direction (or in the direction of expansion/ compression of the coil spring 21). The two other windows, not shown, are arranged offset 180° from each other about the center axis of rotation of the side plate 15 as center. The other windows, not shown, are arranged offset 90 ° with respect to the windows 15a about the center axis of rotation of the side plate 15 as center. The circumferential length of the other window, not shown, is shorter than that of the window 15a. The other window, not shown, is arranged offset towards the outer peripheral side, that is, towards the radially outer side, with respect to the position of the window 15a. It is observed that the other window, not shown, is configured like the window 16b formed in a side plate 16. The side plate 15 is slidably contacted with a ring member 25 in the pre-damper unit 2 disposed more radially inwardly than the main damper unit 3. The side plate 15 has its inner peripheral end carried for rotation by a hub member 33 via a thrust member 34. The side plate 15 has its inner peripheral end locked against rotation by the thrust member 34. The side of the side plate 15 facing the flange member 18 in the vicinity of its inner peripheral end is contacted with the thrust member 34.

A side plate 61 is an annular member arranged spaced apart from the flange member 18 on the axially opposite side (right hand side in Figs.2 and 3) of the flange member 18. The side plate 61 is caulked, in the vicinity of its outer rim end, to the opposite ends of a plurality of connecting members 17, and is rotatable in unison with the disc spring 12 and with the side plate 15. The side plate 16 includes, in its mid portion where there is the main damper unit 3, two windows 16a in which to accommodate the coil springs 19 and the two seat members 22, and two windows 16b in which to accommodate the coil springs 21, two seat members 20 and the elastic members 23. The circumferential end face of the window 16a is detachably contacted with the seat member 20. When the circumferential end face of the window 16a is contacted with the seat member 20, the window 16a holds the seat member. When the seat member 20 is spaced apart from the circumferential end face, the window guides the seat member 20 so that the latter will move along the circumferential direction (or in the direction of expansion/ compression of the coil spring 19). The two windows 16a are arranged offset 180° about the center axis of rotation of the side plate 16 as center. The circumferential end face of the window 16b is detachably contacted with the seat member 22. When the circumferential end face of the window 16b is contacted with the seat member 22, the window 16b holds the seat member. When the seat member 22 is detached from the circumferential end face, the window 16b guides the seat member 22 so that the latter will move along the circumferential direction (or in the direction of expansion/ compression of the coil spring 21). The two windows 16b are arranged offset 180° about the center axis of rotation of the side plate 16 as center. The window(s) 16b is arranged offset 90° with respect to the window(s) 16a about the center axis of rotation of the side plate 15 as center. The circumferential length of the window 16b is shorter than that of the window 16a. The window(s) 16b is disposed closer to the outer rim side, that is, radially more outwardly, than the window(s) 16a. In an area closer to the outer rim side than the main damper unit 3, the side plate 16 is non-rotatably and axially movably engaged with a rotation stop 30a of the thrust member 30. In an area (space) disposed more radially inwardly than the rotation stop 30a of the thrust member 30, the side plate 16 carries one end of the Belleville spring 31. In an area disposed more radially inwardly than the Belleville spring 31, the side plate 16 carries one end of the Belleville spring 36. The side plate 16 has its inner rim end relatively rotatably carried by the hub member 33 via the thrust member 35. The side plate 16 has its inner rim end locked against rotation by the thrust member 35.

The connection member 17 is a member that interconnects the side plates 15, 16 and the disc spring 12. The side plate 15 and the disc spring 12 are caulked, herein by means of two protuberances, to one end of each connection member 17, while the side plate 16 is caulked, herein by means of two protuberances, to the other end of the connection member 17. The mid portion (main body portion) of the connection member 17 acts as spacer to maintain the spacing between the side plate 16 and the disc spring 12. A plurality, four in Fig.1, of such connection members 17 are provided at a predetermined interval along the circumferences of the side plates 15, 16. The connection members 17 are provided more radially outwardly than the outer rim part of the flange member 18 (the outer rim of the most radially outwardly disposed portion of the flange member).

The flange member 18 is an annular plate-shaped member arranged on the outer rim of an outer splined part 33b of a hub member 33. The flange member 18 includes, in its outer peripheral part, where there is the main damper unit 3, two windows 18a, in which to accommodate the coil springs 19 and the two seat members 20, and two windows 18b, in which to accommodate the coil springs 21, two seat members 22 and elastic members 23. The circumferential end face of the window 18a is detachably contacted with the seat member 20. The window 18a holds the seat member 20 when its circumferential end face contacts with the seat member 20. The two windows 18a are arranged offset 180° apart from each other about the center axis of rotation of the flange member 18 as center. The circumferential end face of the window 18b is detachably contacted with the seat member 22. The window 18b holds the seat member 22 when its circumferential end face contacts with the seat member 22. The two windows 18b are arranged offset 180° from each other about the center axis of rotation of the flange member 18 as center. The window 18b is arranged offset 90° with respect to the window 18a about the center axis of rotation of the flange member 18 as center. The circumferential length of the window 18b is shorter than that of the window 18a. The window 18b is arranged offset radially more outwardly than the window 18a. The windows 18a, 18b are formed as recesses extending radially inwardly from the circumferential end face of the flange member 18. In an area disposed radially more inwardly than the main damper unit 3, the flange member 18 has its axial surface slidably clamped between a ring member 26 and a thrust member 30. The flange member 18 has its radially inner end formed with an inner splined part 18c, which inner splined part 18c is engaged with an outer splined part 33b of the hub member 33 such as to allow for torsion between the hub member 33 and the flange member 18 within the range of a predetermined angle.

The coil springs 19 are component parts of the main damper unit 3 and are disposed in the windows 15a, 16a and 18a, formed in the side plates 15, 16 and the flange member 18, respectively, in order to contact with the seat members 20 arranged at both window ends. In case the side plates 15, 16 are subjected to torsion relative to the flange member 18, the coil springs 19 are contracted to absorb the shock caused by differential rotation between the side plates 15, 16 and the flange 18. Each coil spring 19 may be a straight (linearly extended) coil spring extending along the direction of contraction/ elongation (longitudinal direction). The length along the direction of contraction/ elongation of the coil spring 19 is selected to be longer than that of the coil spring 21. The spring force (spring coefficient) of the coil spring 19 is selected to be greater than that of each of the coil springs 28, 29 in the pre-damper unit 2.

The seat members 20 are component parts of the main damper unit 3 and are disposed in the windows 15a, 16a and 18a, formed in the side plates 15, 16 and the flange member 18, respectively. The seat members are disposed between the circumferential end faces of the windows 15a, 16a and 18a and the end parts of the coil springs 19. The seat members 20 may be formed of resin to reduce wear caused to the coil springs. Each seat member 20 includes a protuberance 20a extending circumferentially at the inner side (space) of the coil spring 19. The length of the protuberance 20a of the seat member 20 on one end part of the coil spring 19 is set so that, in case the side plates 15, 16 are subjected to torsion relative to the flange member 18, the torsion between the side plates 15, 16 and the flange member 18 will be allowed until the protuberance abuts against the protuberance 20a of the opposite side seat member 20 on the opposite side of the coil spring 19. By setting the torsion angle of the main damper unit 3 by the protuberance 20a of the seat member 20, it becomes possible to reduce the length between the windows 18a, 18b of the flange member 18 as well as the length of each coil spring 19 taking into account the limited dimension of the clutch disc.

The coil springs 21 are component parts of the main damper unit 3 accommodated in the windows formed in the side plates 15, 16 and in the flange member 18 (in the other window in the side plate 15, window 16b and in the window 18b) to contact with the seat members 22 disposed at both ends in the windows. The coil springs 21 are contracted when the side plates 15, 16 and the flange member 18 become distorted relative to each other, thereby absorbing the shock caused by differential rotation between the side plates 15, 16 and the flange member 18. As the coil spring 21, a coil spring which is linear in the contracting/ extending direction, that is, a straightly extending coil spring, may be used. The length along the direction of contraction/ extension of the coil spring 21 is selected to be shorter than that of the coil spring 19. The spring force (spring coefficient) of the coil spring 21 is selected to be greater than that of the coil springs 28, 29. The position of the coil spring 21 is disposed offset towards the outer rim side, that is, towards the radially outer side, relative to that of the coil spring 19. The elastic member 23 is disposed within the inner space of the coil spring 21.

The seat members 22 are component parts of the main damper unit 3 disposed in the windows formed in the side plates15, 16 and the flange member 18 (the other window in the side plate 15, not shown, window 16b and the window 18b). The seat members are disposed between the circumferential end faces of the windows and the end parts of the coil springs 21. The seat members 20 may be formed of a resin to reduce wear caused to the coil springs 21. The seat member 22 is designed so that, in case the side plates 15, 16 are distorted relative to the flange member 18, the torsion between the side plates 15, 16 and the flange member 18 will be allowed until the seat member abuts against the seat member 22 on the opposite side of the coil spring 21 via the elastic member 23. The magnitude of torsion allowed between the side plates 15, 16 and the flange member 18 by the paired seat members 22 and the elastic member 23 may be set so as to be equal to or lesser than that between the side plates 15, 16 and the flange member 18 by the protuberances 20a of the seat members 20.

The elastic member(s) 23 is a member of an elastic material introduced into the inner space within the coil spring 21. In case the side plates 15, 16 and the flange member 18 have become distorted relative to each other, the elastic member is clamped between the pair seat members 22 to control the torsion between the side plates 15, 16 and the flange member 18.

The ring member 25 is a ring-like member of the pre-damper unit 2 arranged between the side plate 15 and the ring member 26. The ring member 25 has its surface facing the side plate 15 slidably contacted with the side plate 15. The surface of the ring member 25 facing the ring member 26 is formed with a step so as not to interfere with the operation of the plate member 27 inclusive of peripheral protuberances 27a, 27b. The surface of the ring member 25 facing the ring member 26 includes two spring accommodating portions 25a in which to accommodate the coil springs 28 and two springs accommodating portions 25b in which to accommodate the coil spring 29. The circumferential end faces of the spring accommodating portions 25a, 25b are disposed between the neighboring coil springs 19, 21 in the main damper unit 3 and are offset more inwardly than the coil springs 19, 21. The circumferential end faces of the spring accommodating portions 25a are detachably contacted with the coil spring 28. The spring accommodating portions 25a guide the contraction/ extension of the coil spring 28. The two spring accommodating portions 25a are arranged offset by 180° from each other about the center axis of rotation of the ring member 25 as center. The circumferential end face of the spring accommodating portion 25b is detachably contacted with the coil spring 29. The spring accommodating portions 25b guide the contraction/ extension of the coil spring 29. The two spring accommodating portions 25b are disposed offset by 180° relative to each other about the center axis of rotation of the ring member 25 as center. The spring accommodating portion(s) 25b is disposed offset by an angle less than 90° with respect to the nearest spring accommodating portion(s) 25a about the center axis of rotation of the ring member 25 as center. The circumferential length of the spring accommodating portion 25b is selected to be shorter than that of the spring accommodating portion 25a. The spring accommodating portions 25a, 25b are arranged on the circumference of the same circle, with the radial positions thereof being the same. The ring member 25 is contacted with the ring member 26 at a site not interfering with the operation of the surface of the plate member 27 facing the ring member 26 inclusive of the peripheral protuberances 27a, 27b. The ring member 25 includes a rotation stop 25c that locks the ring member 26 and the flange member 18 against rotation. The rotation stop 25c is engaged (introduced) non-rotatably axially movably in a recess formed in the outer peripheral surface of the ring member 26. The rotation stop 25c is engaged (introduced) relatively non-rotatably and axially movably in an opening formed in the flange member 18.

The ring member 26 is a ring-like member as a component part of the pre-damper unit 2. The ring member 26 is arranged between the flange member 18 and the ring member 25 and contacts with the flange member 18 by its surface facing the flange member 18. The surface of the ring member 26 facing the ring member 25 is formed with a step so that the operation of the ring member 26 will not interfere with the operation of the plate member 27 inclusive of peripheral protuberances 27a, 27b. The surface of the ring member 26 facing the ring member 25 include two spring accommodating portions 26b in which to accommodate the coil springs 29 and two other spring accommodating portions, not shown, in which to accommodate the coil springs 28. The other spring accommodating portions, not shown, and the spring accommodating portions 26b, are disposed between the neighboring coil springs 19, 21 in the main damper unit 3 and more inwardly than the coil springs 19, 21. The circumferential end faces of the other spring accommodating portions, not shown, are detachably contacted with the coil springs 28. The other spring accommodating portions, not shown, guide the contraction/ extension of the coil spring 28. The two other spring accommodating portions, not shown, are arranged offset by 180° relative to each other about the center axis of rotation of the ring member 26 as center. The circumferential end faces of the spring accommodating portions 26b are detachably contacted with the coil springs 29. The spring accommodating portions 26b guide the contraction/ extension of the coil spring 29. The two spring accommodating portions 26b are disposed offset by 180° relative to each other about the center axis of rotation of the ring member 26 as center. The spring accommodating portions 26b are disposed offset by an angle less than 90° with respect to the nearest other spring accommodating portions, not shown, about the center axis of rotation of the ring member 25 as center. The circumferential length of the spring accommodating portion 26b is selected to be shorter than that of the other spring accommodating portion. The other spring accommodating portions, not shown, and the spring accommodating portion 26b, are arranged on the circumference of the same circle, with the radial positions thereof being the same. The ring member 26 is contacted with the ring member 25 at a site not interfering with the operation of the surface of the plate member 27 facing the ring member 26 inclusive of the peripheral protuberances 27a, 27b. The ring member 26 includes a recess in its outer peripheral surface engaged non-rotatably and axially movably by the rotation stop 25c of the ring member 25. By the rotation stop 25c, the ring member 26 is rotated in unison with the ring member 25 and the flange member 18.

The plate member 27 is annular and plate-shaped and is arranged on the outer periphery of the outer splined part 33b of the hub member 33. It is a component part of the pre-damper unit 2. In the pre-damper unit 2, the plate member 27 includes two paired outer peripheral protuberances 27a that may abut against both ends of the coil spring 28 and two outer peripheral protuberances 27b that may abut against an end of the coil spring 29. The circumferential end faces of the pair outer peripheral protuberances 27a are detachably contacted with the coil spring 28. The two paired outer peripheral protuberances 27a are arranged offset by 180° relative to each other about the center axis of rotation of the plate member 27 as center. The circumferential end face of the outer peripheral protuberance 27b is detachably contacted with the coil spring 29. The two paired outer peripheral protuberances 27b are arranged offset by 180° relative to each other about the center axis of rotation of the plate member 27 as center. The outer peripheral protuberance 27b is disposed offset by an angle less than 90° with respect to the nearest pair outer peripheral protuberances 27a about the center axis of rotation of the plate member 27 as center. The outer peripheral protuberance 27b can abut against one end of the coil spring 29. Hence, the outer peripheral protuberance 27b is able to abut against the coil spring 29 for rotation in one direction, however, it does not abut against the coil spring 29 for rotation in the reverse direction. The window 18b is disposed offset more outwardly (radially outwardly) than the window 18a. The plate member 27 includes an inner splined part 27c at its radially inner end. The inner splined part 27c is non-rotatably engaged with the outer splined part 33b of the hub member 33.

The coil spring 28 is a component part of the pre-damper unit 2. It is accommodated in the spring accommodating portion 25a and other spring accommodating portion (, not shown, formed in the ring member 26) formed in the ring members 25, 26, respectively. The coil spring is detachably contacted with the pair peripheral protuberances 27a provided on both ends of the spring accommodating portion. The coil spring 28 is contracted when the ring members 25, 26 and the plate member 27 become distorted in both directions to absorb the shock caused by differential rotations of the ring members 25, 26 and the plate member 27. The coil spring 28 may be a straight (linearly extended) coil spring extending along the direction of contraction/ elongation (longitudinal direction). The length of the coil spring 29 in the direction of contraction/ extension is selected to be longer than that of the coil spring 28. The spring force (spring coefficient) of the coil spring 28 is selected to be smaller than that of each of the coil springs 19, 21.

The coil spring 29 is a component part of the pre-damper unit 2 and is accommodated in each of the spring accommodating portions 25a, 26b formed respectively in the ring members 25, 26. The coil spring 29 is detachably contacted with the outer peripheral protuberance 27b of the plate member 27 provided at one end. The coil spring 29 is contracted when the ring members 25, 26 and the plate member 27 become distorted in one direction to absorb the shock caused by the differential rotations between the ring members 25, 26 and the plate member 27. It is observed that the coil spring 29 is not contracted when the ring members 25, 26 and the plate member 27 become distorted in the opposite direction. The coil spring 28 used may be a straight (linearly extended) coil spring extending along the direction of contraction/ elongation (longitudinal direction). The length of the coil spring 29 in the contracting/ extending direction is selected to be shorter than that of the coil spring 28. The spring force (spring coefficient) of the coil spring 29 is selected to be greater than that of each of the coil springs 19, 21 in the main damper unit 3. The coil springs 29, 28 are arranged on the circumference of a same circle (i.e., the positions thereof in the radial direction remaining the same).

The thrust member 30 is an annular member arranged between the side plate 16 and the flange member 18. The thrust member 30 includes a rotation stop 30a engaged non-rotatably and axially movably in an opening formed in the side plate 16. The thrust member 30 is biased towards the flange member 18 by a Belleville spring 31 into pressure contact slidably with the flange member 18. The thrust member 30 is also non-rotatably and axially movably engaged with the thrust member 35 disposed on an inner peripheral side.

The Belleville spring is a Belleville-shaped (conical annular) spring arranged between the thrust member 30 and the side plate 16 to bias the thrust member towards the flange member 18.

The hub member 33 is a member that outputs rotary power from the damper units 2, 3 towards the input shaft 4 of the speed-change transmission. The hub member 33 includes a flange part 33a extended from a predetermined site on the outer rim of its cylindrical portion. The inner peripheral surface of a cylindrical portion of the hub member 33 is in splined engagement with the input shaft 4. The outer peripheral surface of the hub member 33 carries the side plate 15 relatively rotatably via the thrust member 34, and carries the side plate 16 relatively rotatably via the thrust member 16. The outer peripheral surface of the flange part 33a includes an outer splined part 33b carrying outer splined teeth thereon. The outer splined part 33b is engaged with the inner splined part 18c of the flange member 18 to allow for torsion between the hub member 33 and the flange member 18 within the range of a predetermined angle. The outer splined part 33b is non-rotatably engaged with the inner splined part 27c of the plate member 27. The flange part 33b [sic.33a] is slidably clamped between the thrust members 34, 35.

The thrust member 34 is an annular member disposed between the side plate 15 and the hub member 33. In the axial direction, the thrust member 34 is arranged between the side plate 15 and the flange part 33a and is relatively non-rotatably and axially movably engaged with the side plate 15, such that thrust member 34 is slidably pressure-contacted with the flange part 33a. In the radial direction, the thrust member 34 is interposed between the side plate 15 and the hub member 33 as well and operates as a slide bearing (bush) that carries the side plate 15, for relative rotation to, on the hub member 33.

The thrust member 35 is an annular member disposed between the side plate 36 and the hub member 33. In the axial direction, the thrust member 35 is disposed between the Belleville spring 36 and the flange part 33a and is biased by the Belleville spring 36 towards the flange part 33a into slidable pressure contact with the flange part 33a. The thrust part 35 is relatively non-rotatably and axially movably engaged with the side plate 16. In the radial direction, the thrust member 35 is interposed between the side plate 16 and the hub member 33 as well and operates as a slide bearing (bush) that carries the side plate 15 for relative rotation with respect to the hub member 33.

The Belleville spring 36 is a Belleville-shaped (conically annular) spring arranged between the thrust member 35 and the side plate 16 to bias the thrust member 35 towards the flange part 33a. The Belleville spring 36 is locked (secured) against rotation to the thrust member 35.

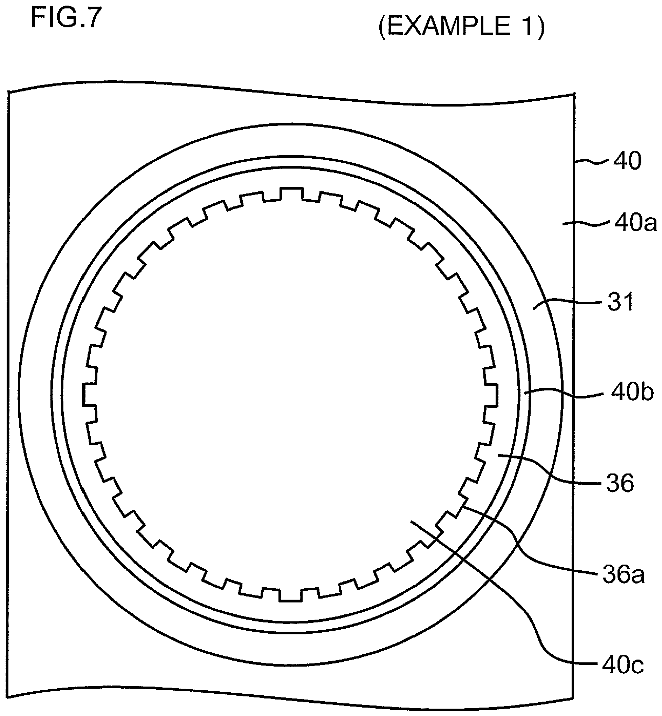

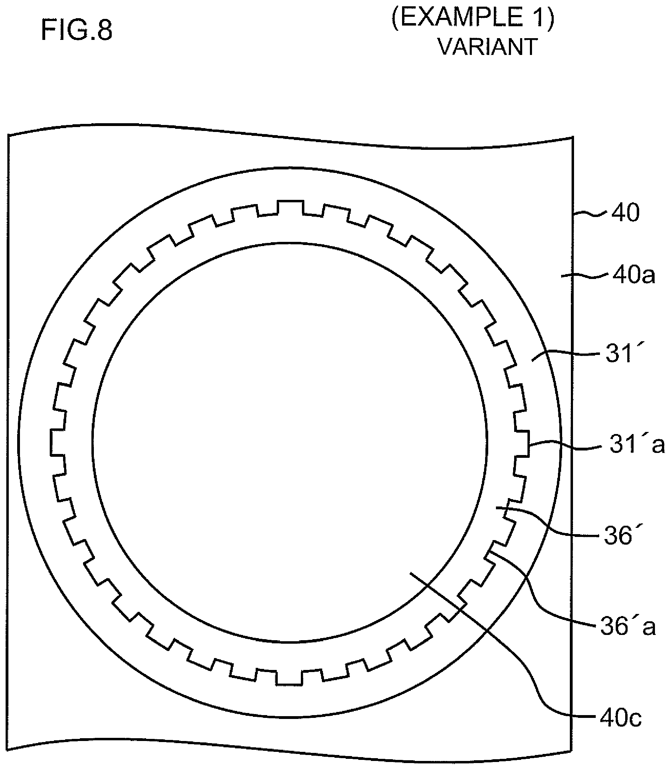

It is observed that the Belleville springs 31, 36 may be obtained simultaneously (together) by press-forming a single spring steel plate 40 (a sheet steel or a strip-shaped steel for mass production), as shown in Fig.7. By so doing, scraps 40a, 40b or 40c of the spring steel plate 40 may be decreased to improve the yield of the material. The Belleville spring 31 is used for the hysteresis part with a larger diameter. The Belleville spring 36 is used for a hysteresis part with a small diameter, and is formed with cut-outs 36a on its inner peripheral part to decrease the spring load. These cut-outs 36a may be used for rotation stop for the Belleville spring 36 against the thrust member 35. As a variant to Fig.7, no scraps may be produced between a Belleville spring 31' and a Belleville spring 36', as shown in Fig.8, in which case cut-outs 31'a are formed on the inner rim part of the Belleville spring 31' to decrease the spring load and cut-outs 36'a are formed on the outer periphery (rim) of the Belleville spring 36' to decrease the spring load.

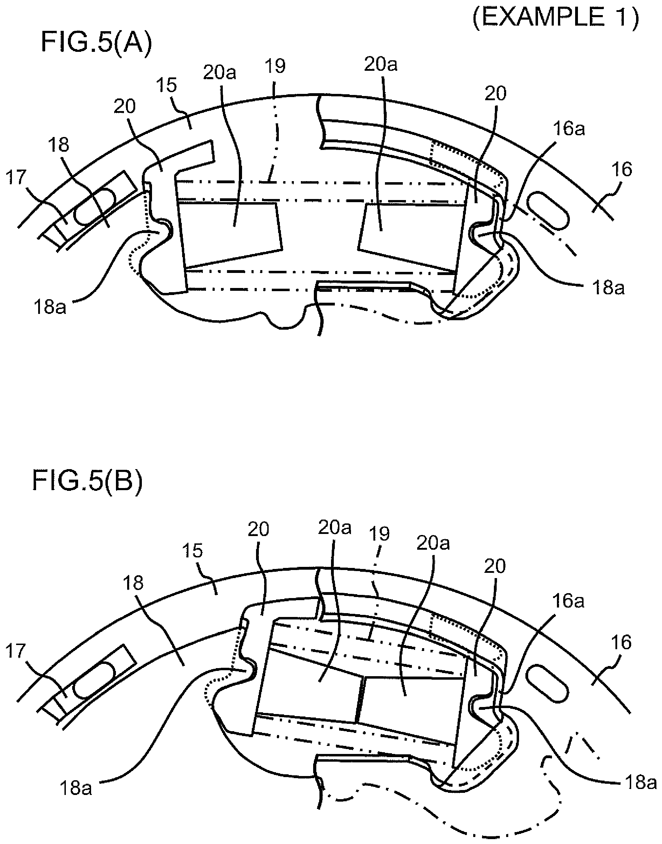

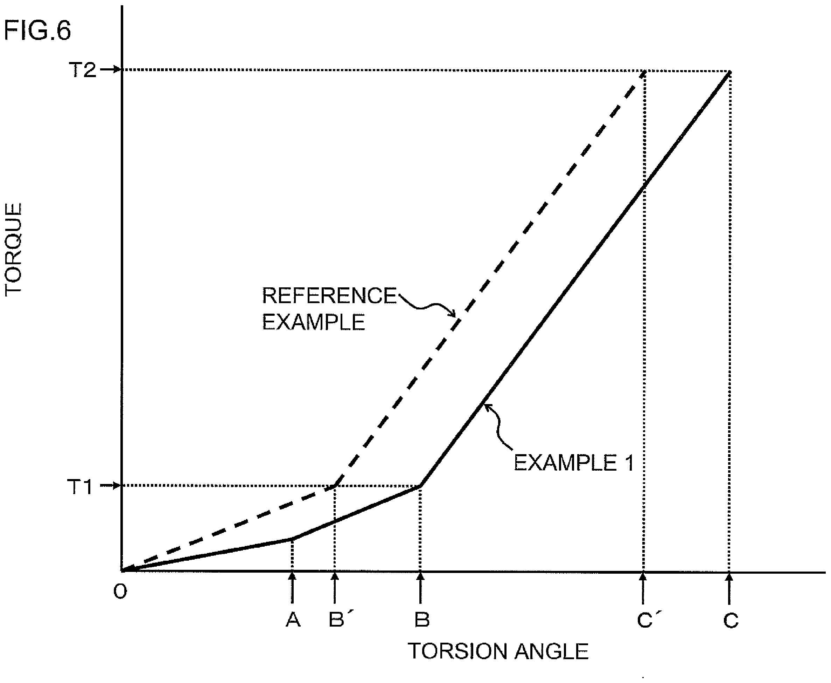

The operation of the torsion damper device of Example 1 of the present invention will now be described with reference to the drawings. Figs.4(A), (B) are schematic views for illustrating the operation of the pre-damper unit in the torsion damper device of Example 1 of the present invention, with Fig.4(A) showing a pre-torsion state and Fig.4(B) showing a post-torsion state. Figs.5(A), (B) are schematic views for illustrating the operation of the main damper unit in the torsion damper device of Example 1 of the present invention, with Fig.5(A) showing a pre-torsion state and Fig.5(B) showing a post-torsion state. Fig.6 depicts a graph schematically showing torque characteristics against the torsion angle of Example 1 and Reference Example.

It is observed that, in the torsion damper device according the to the Reference Example, the lengths of four coil springs in the main damper unit are selected to be equal to one another, while the lengths of four coil springs in the pre-damper unit are also selected to be equal to one another.

First, the motive power transmitting path of the torsion damper device of Example 1 will be explained. Referring to Figs.1 to 3, the rotary power of an engine crankshaft is transmitted from the facings 10, 11 to the rivets 13, 14, thence to the disc spring 12, thence to the connection members 17, thence to the side plates 15, 16, thence to the coil springs 19, 21, thence to the flange member 18, thence to the ring members 25, 26, thence to the coil springs 28 [, 29], thence to the plate member 27, thence to the hub member 33 and ultimately to the input shaft of the speed-change transmission.

If torsion is produced at this time between the facings 10, 11 and the hub member 33, the pre-damper unit 2 absorbs torque fluctuations caused by initial torsion. In case torsion is further produced (enlarged) such that it cannot be absorbed by the pre-damper unit 2, the torque fluctuations are absorbed by the main damper unit.

In the pre-damper unit 2, torsion occurs as indicated in Figs.4(A) and then in 4(B). That is, just the coil springs 28, 29 are in operation in the pre-damper unit 2 when torsion is produced between the facings 10, 11 and the hub member 33 until such time that splined teeth of the outer splined part 33b of the hub member 33 push the splined teeth of the inner splined part 18c of the flange member 18. More specifically, only the coil spring 28 in the pre-damper unit 2 is in operation until the outer peripheral protuberance 27b of the plate member 27 comes to abut against the coil spring 29 (see torsion angle O-A in Fig.6). Further, only the coil springs 28, 29 are in operation from a time point at which the outer peripheral protuberance 27b comes to pressure contact with the coil spring 29 until the teeth of the outer splined part 33b of the hub member 33 to abut the teeth of the inner splined part 18c of the flange member 18 (see torsion angle range A-B in Fig.6).

It is observed that, because the four coil springs in the main damper unit in the Reference Example are of the same length, it is not possible to enlarge the area (space) in the main damper unit disposed between the coil springs on a side situated more inwardly than the coil springs. Hence, the lengths of the coil springs in the pre-damper unit in the Reference Example become shorter than that of the coil spring 28 in the pre-damper unit 2 of Example 1, resulting in that the torsion angle of the pre-damper unit of the Reference Example (see the torsion angle O-B' in Fig.6) becomes smaller than that of the pre-damper unit 2 in Example 1 (see the torsion angle O-B in Fig.6).

If the teeth of the outer splined part 33b of the hub member 33 abut to the teeth of the inner splined part 18c of the flange member 18, and torsion is further produced between the facings 10, 11 and the hub member 33, torsion no longer proceeds in the pre-damper unit 2. Hence, torsion is produced in the main damper unit 3 as indicated in Fig.5(A) and then in Fig.5(B). That is, as the hub member 33 is twisted, the teeth of the outer splined part 33b of the hub member 33 push the teeth of the inner splined part 18c of the flange member 18 to produce torsion between the flange member 18 and the side plates 15, 16. Thus, the coil springs 19, 21 are in operation until the protuberances 20a of the seat members 20 come to abut against each other or until both of the pair seat members 22 abut against the elastic member 23 (see torsion angle range B to C in Fig.6). At this time, the coil springs 28, 29 of the pre-damper unit 2 are in rotation in the state of maximum contraction in unison with the flange member 18.

In the above operation, it is assumed that the hub member 33 is rotated clockwise, when seen in Figs.4 and 5, relative to the facings 10, 11. When the hub member 33 is rotated counterclockwise relative to the facings 10, 11, the coil spring 29 is not in operation. It is because only the coil spring 28 is in operation in the pre-damper unit 2 until the teeth of the outer splined part 33b of the hub member 33 abut to the teeth of the inner splined part 18c of the flange member 18, with the outer peripheral protuberance 27b of the plate member 27 not abutting to the coil spring 29. When the teeth of the outer splined part 33b of the hub member 33 abut against the teeth of the inner splined part 18c of the flange member 18, and torsion is further produced in the counterclockwise direction between the facings 10, 11 and the hub member 33, the coil springs 19, 21 are in operation until the outer peripheral protuberances 27a of the pair plate members 20 abut against each other (or until both of the pair seat members 22 abut against the elastic member 23).

The following advantageous effect is obtained in Example 1.

First, by setting the length of the coil spring 21 in the main damper unit 3 so as to be shorter than that of the coil spring 19, and by arranging the coil spring 21 more radially outwardly than the coil spring 19, the area lying between the neighboring coil springs 21, 19 on a side situated more (radially) inwardly than the coil springs 19, 21 may be enlarged. It is thus possible to set a longer length of the coil spring 28 of the pre-damper unit 2. Thus, the torsion angle in the pre-damper unit 2 may be enlarged just by using the linear coil springs 28, 29 without the necessity of using the arcuately shaped coil spring, as in the conventional technique. The reduction in the rigidity (i.e., modulus of elasticity) of the pre-damper unit 2 is also achieved. Moreover, the attenuation performance due to the slide resistance between the coil springs 28, 29 and the ring members 25, 26 may also be prevented from being deteriorated. In addition, the degree of freedom in designing the torsion characteristic of the pre-damper unit 2 is sufficient, offering advantage in designing.

Second, by using the seat members 20, 22, the coil springs 19, 21 may be disposed radially outwardly. Hence, the coil springs 28, 29 of the pre-damper unit 2 arranged on the radially inwardly situated side of the main damper unit 3 may be arranged off set as radially outward as possible, so that it is possible to set a longer length of the coil spring 28 of the pre-damper unit 2.

Third, by setting the torsion angle of the main damper unit 3 by the protuberances 20a of the pair seat members 20, it is possible to set a shorter length of the spacing between the windows 18a, 18b of the flange member 18. It is thus possible to reduce the length of each coil spring 19 in the main damper unit 3 taking into account the limited dimension of the clutch disc. As a result, the degree of freedom in designing the torsion characteristic in the main damper unit 3 (the relationship of the angle of relative rotation with respect to the input torque) may be improved.

In Example 1, the coil springs 28, 29 with different lengths are used. However, the torsion angle in the pre-damper unit 2 may be increased even in case the coil springs 28, 29 are of the same lengths.

It is observed that the expression which reads: "the position of the coil spring 21 is arranged offset closer to the outer periphery, i.e., more radially outwardly, than that of the coil spring 19" is synonymous to the expression which reads: "the inner area (side) of the coil spring 21 in the radial direction of the main damper unit 3 is arranged on the more radially outwardly situated area (side) in the main damper unit 3 than the inner area (side) of the coil spring 19".

In the claims, the main damper unit 3 acts as a first damper unit, and the pre-damper unit 2 acts as a second damper unit. The side plates 15, 16 act as a first rotary member, while the flange member 18, ring member 25 and the ring member 26 act as a second rotary member. The plate member 27 acts as a third rotary member. The coil spring 19 acts as a first coil spring(s). The coil spring 28 and the coil spring 29 act as second coil spring(s) (a 21st coil spring and a 22nd coil spring). The coil spring 21 acts as a third coil spring.

The coil springs 28, 29 are arranged on a motive power transmitting path between the ring members 25, 26 (flange member 18) and the plate member 27 to absorb the torsion produced between the ring members 25, 26 (flange member 18) and the plate member 27.

### Example 2

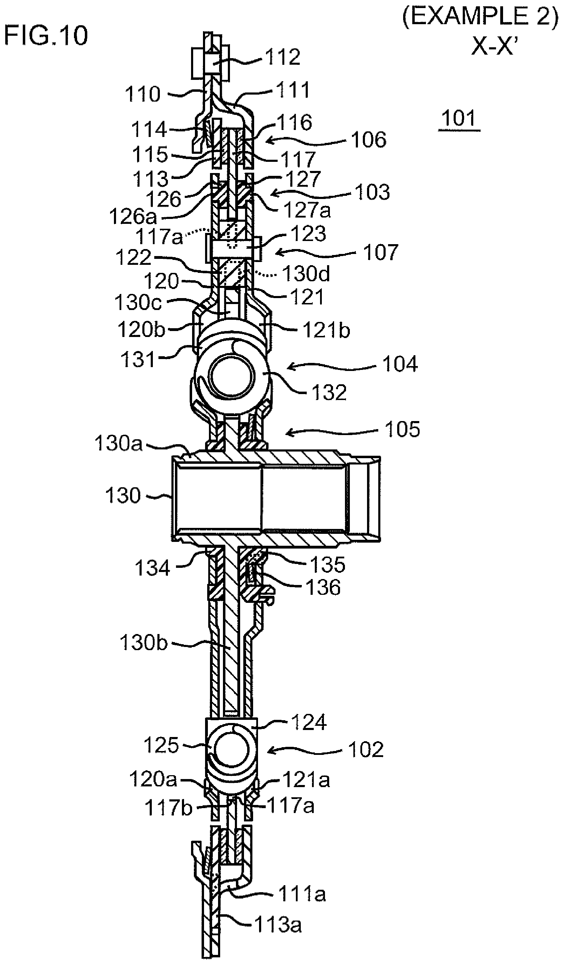

A torque fluctuation absorbing device of Example 2 of the present invention will now be described with reference to the drawings. Fig.9 is a schematic plan view showing an arrangement of the torque fluctuation absorbing device of Example 2 of the present invention, and Fig. 10 is a cross-sectional view, taken along line X-XH' of Fig.9, schematically showing an arrangement of the torque fluctuation absorbing device of Example 2 of the present invention.

A torque fluctuation absorbing device 101 of Example 2 is provided on a motive power transmitting path between e.g., an engine axis of rotation and an axis of rotation of a motor-generator to absorb or suppress torque fluctuations caused by torsion between the two axles of rotation. The motor generator may be a motor generator of a hybrid car, a clutch drum of an automatic transmission or a pulley of CVT. The torque fluctuation absorbing device 101 includes first and second damper units 102, 104, having a torsion buffering function and absorbing torque fluctuations by a spring force, first and second hysteresis units 103, 105 that absorb or suppress torque fluctuations by the hysteresis torque caused e.g., by friction, and a limiter unit 106 that produces slip when the torque fluctuations can be no longer absorbed (suppressed) by the damper units 102, 104 or the hysteresis units 103, 104. The torque fluctuation absorbing device 101 also includes a plurality of stopper units 107 that stop excess torsion of the damper units 102, 104 to protect coil springs 125, 132 in the damper units 102, 104.

The first and second damper units 102, 104 are mounted in cascade on the motive power transmitting path. The first and second damper units 102, 104 operate simultaneously when the torsion is produced. The rotary power from the engine side axis of rotation is delivered via the limiter unit 106 to the first damper unit 102 and output to the second damper unit 104. The rotary power of the first damper unit 102 is delivered to the second damper units 104 via the side plates 120, 121 and output towards the axis of rotation of the motor generator. The first damper unit 102 includes a plurality of coil springs 125 which are periodically distributed at two or three places (three places in Fig.9) on one and the same circumference of a circle disposed radially outwardly of the second damper unit 104. The second damper unit 104 includes a plurality of coil springs 132 which are periodically distributed at two or three places (three in Fig.9) on one and the same circumference of a circle disposed more radially inwardly than the first damper unit 102. A plurality of the coil springs 125 of the first damper unit 102 are arranged offset by an angle of 120°(, which may also be 180°), relative to the neighboring coil spring 125 disposed on the same circumference of circle. A plurality of the coil springs 132 of the second damper unit 104 are arranged offset by an angle of 120°, (which may also be 180°), relative to the neighboring coil spring 132 disposed on the same circumference. The periodic position of the coil spring 125 of the first damper unit 102 is decided with an offset of a predetermined angle from the periodic position of the coil spring 132 of the second damper unit 104. For example, the coil spring 125 of the first damper unit 102 is arranged by an offset angle of 60°, (which may also be 90°), with respect to the near-by coil spring 132 of the second damper unit 104.

The first hysteresis units 103 are arranged on the motive power transmitting path in parallel with the first damper units 102. The first hysteresis units 103 are periodically disposed on the circumference of the same circle as the first damper units 102 at a plurality of sites (two or three sites; three sites in Fig.9) circumferentially offset from the coil spring 125 in the first damper unit 102. The second hysteresis unit(s) 105 is arranged on the motive power transmitting path in parallel with the second damper units 104. The second hysteresis unit(s) 105 is circularly arranged on a circumference of a circle disposed more radially inwardly than the second damper units 104.

The limiter 106 is circularly arranged on a circumference of a circle disposed more radially outwardly than the first damper units 102 and the first hysteresis units 103.

The stopper units 107 are arranged on the circumference of the same circle as that of the first damper units 102 at a plurality of sites (two or three sites; three sites in Fig.9) circumferentially offset from the coil springs 125 in the first damper units 102. The stopper units 107 are disposed more inwardly than the first hysteresis units 103.

The torque fluctuation absorbing device 101 includes a support plate 110, a cover plate 111, rivets 112, a pressure plate 113, a Belleville spring 114, friction materials 115, 116, a lining plate 117, side plates 120, 121, stopper members 122, rivets 123, seat members 124, coil springs 125, thrust members 126, 127, a hub member 130, a seat member 131, coil springs 132, floating elastic members 133, thrust members 134, 135 and a Belleville spring 136.

The support plate 110 is an annular plate member as a component of the limiter unit 106. The support plate 110 has its outer rim part connected via a plurality of rivets 112 to the cover plate 111, and is run in rotation in unison with the cover plate 111. The support plate 110 includes holes 110a, in each of which to insert a bolt, not shown, and is fastened by the bolts, along with the cover plate 111, to a flywheel, not shown, connected to an engine axis of rotation. The inner peripheral part of the support plate 110 is spaced apart from the cover plate 111. The surface of the support plate 110 facing the pressure plate 113 is pressure-contacted with the outer peripheral end of the Belleville spring 114.

The cover plate 111 is an annular plate member as a component of the limiter unit 106. The cover plate 111 has its outer rim part connected via a plurality of rivets 112 to the support plate 110, and is run in rotation in unison with the support plate 110. The cover plate 111 includes holes 111b in each of which to insert a bolt, not shown, and is fastened by the bolts, along with the cover plate 111, to a flywheel, not shown, connected to the engine axis of rotation. The inner peripheral part of the cover plate 111 is spaced apart from the support plate 110. The cover plate 111 includes a cut-out 111a axially movably and non-rotatably engaged by a protuberance 113a of the pressure plate 113. The cover plate 111 is slidably pressure-contacted with the friction material 115 [sic. 116].

The pressure plate 113 is an annular plate member as a component of the limiter unit 106. The pressure plate 113 is an annular member disposed between the Belleville spring 114 and the friction material 115. The pressure plate 113 includes a plurality of protuberances 113a extending from the outer periphery at its outer rim end. The protuberances 113a are axially movably and non-rotatably engaged in the cut-out 111a of the cover plate 111. The pressure plate 113 is biased by the Belleville spring 114 towards the friction material 115 into slidable pressure contact with the friction material 115.

The Belleville spring 114 is an annular Belleville-shaped (conical annular) spring arranged between the cover plate 111 and the pressure plate 113, and is a component of the limiter unit 106. The Belleville spring 114 biases the pressure plate 113 towards the friction material 115.

The friction material 115 is an annular member disposed between the pressure plate 113 and the lining plate 117, and is a component of the limiter unit 106. The friction material 115 is fastened by rivets, not shown, to the lining plate 117, and is slidably pressure contacted with the pressure plate 113.

The friction material 116 is an annular member disposed between the lining plate 117 and the cover plate 111, and is a component of the limiter unit 106. The friction material 116 is fastened by rivets, not shown, to the lining plate 117, and is slidably pressure contacted with the cover plate 111.

The lining plate 117 is an annular plate member, and is a component part of the damper unit 102, first hysteresis unit 103 and the limiter unit 106. The lining plate 117 is disposed between the side plates 120, 121 as it is spaced apart from these side plates. For operation as the limiter unit 106, the lining plate 117 has its outer rim part disposed between the friction materials 115, 116, which friction materials 115, 116 are fastened to the lining plate with e.g., rivets, not shown. The lining plate 117 is rotated in unison with the friction materials 115, 116. For operation as the first hysteresis unit 103, the portion of the lining plate 117 disposed more radially inwardly than the limiter unit 106 is arranged between the thrust members 126, 127, and is slidably clamped by the thrust members 126, 127. A plurality (three in Fig.9) of portions of the lining plate 117 are clamped between and slidably retained by the thrust members 126, 127. For operation as the first damper unit 102, the lining plate 117 includes a plurality of pair protuberances 117a extending from the inner peripheral end face at a site circumferentially offset from the first hysteresis unit 103. A window(s) 117b in which to accommodate the seat member 124 and the coil spring 125 is defined between the pair protuberances 117a. The window(s) 117b is detachably contacted at a peripheral end face thereof with the seat member 124. The protuberances 117a act as components of the stopper unit 107 as well. The peripheral end faces of the protuberances 117a are detachably contacted with the stopper member 122 configured to prevent excess torsion (torsion between the lining plate 117 and the side plates 120, 121) in the first damper unit 102. The inner peripheral end face of the lining plate 117 excluding the pair protuberances 117a is guided by the outer peripheral surface of the stopper member 122. This inhibits radial movement of the lining plate, while allowing guiding its movement in the circumferential direction.

The side plate 120 is an annular plate member and is a component part of each of the first damper unit 102, first hysteresis unit 103, second damper unit 104 and the second hysteresis unit 105. The side plate 120 transmits the rotary power from the first damper unit 102 and first hysteresis unit 103 to the second damper unit 104 and to the second hysteresis unit 105. The side plate 120 is spaced apart from the side plate 121 via the stopper member 122. The side plate 120 is connected to the side plate 121 by the rivets 123 along with the stopper member 122. The side plate 120 is rotated in unison with the stopper member 122 and the side plate 121. The side plate 120 includes, in the first hysteresis unit 103, offset more radially outwardly than the stopper member 122, a plurality of openings engaged axially movably and circumferentially non-movably by a plurality of rotation stops 126a of the thrust members 126 from one of a plurality, (three in Fig.9,) of the thrust members 126 to another. The side plate 120 has a plurality, (three in Fig.9,) of the holes (openings). The side plate 120 includes, in the first damper unit 102 circumferentially offset from the first hysteresis unit 103, a window(s) 120a in which to accommodate the seat member 124 and the coil spring 125. The peripheral end face of the window 120a is detachably contacted with the seat member 124. The side plate 120 includes, in the second damper unit 104, offset more radially inwardly than the first damper unit 102, a window(s) 120b in which to accommodate the seat member 131 and the coil spring 132. The circumferential end face of the window 120b is detachably contacted with the seat member 131. In the second hysteresis unit 105, offset more radially inwardly than the second damper unit 104, the side plate 120 is axially movably and non-rotatably engaged with the thrust member 134. The side plate 120 is rotatably carried at its inner peripheral part by the hub member 130 via the thrust member 134.

The side plate 121 is an annular plate member and is a component of each of the first damper unit 102, first hysteresis unit 103, second damper unit 104 and the second hysteresis unit 105. The side plate 121 transmits the rotary power from the first damper unit 102 and the first hysteresis unit 103 to the second damper unit 104 and the second hysteresis unit 105. The side plate 121 is arranged spaced apart from the side plate 120 via the stopper members 122. The side plate 121 is connected to the side plate 120 by the rivets 123 along with the stopper member 122. The side plate 121 is rotated in unison with the stopper member 122 and the side plate 120. The side plate 121 includes, in the first hysteresis unit 103, offset more radially outwardly than the stopper member 122, a plurality of pair openings (holes) engaged axially movably and circumferentially non-movably by a plurality of rotation stops 127a (protuberances) of the thrust members 127 from one of a plurality, (three in Fig.9,) of the thrust members 127 to another. The side plate 121 has a plurality, (three in Fig.9,) of the pair openings (holes). The side plate 121 includes, in the first damper unit 102 circumferentially offset from the first hysteresis unit 103, a window(s) 121a in which to accommodate the seat member 124 and the coil spring 125. The circumferential end face(s) of the window 121a is detachably contacted with the seat member 124. The side plate 121 includes, in the second damper unit 104 offset more radially inwardly than the first damper unit 102, a window(s) 121b in which to accommodate the seat member 131 and the coil spring 132. The circumferential end face(s) of the window 121b is detachably contacted with the seat member 131. In the second hysteresis unit(s) 105, offset more radially inwardly than the second damper unit 104, the side plate 121 is axially movably and non-rotatably engaged with the thrust member 135, while retaining the outer peripheral end of the Belleville spring 136. The side plate 121 is rotatably carried at its inner peripheral part by the hub member 130 via the thrust member 135.

The stopper member 122 is a block-like member as a component of the stopper unit 107. The stopper member(s) 122 is arranged offset more radially inwardly than the thrust members 126, 127 of the first hysteresis unit 103 at a plurality, (three in Fig.9,)of locations between the side plates 120, 121, and is connected to the side plates 120, 121 by a plurality, (two in Fig.9,)of rivets 123 per one stopper member 122. When the torsion (torsion between the lining plate 117 and the side plates 120, 121) is produced in the first damper unit 102, in a radially outwardly offset portion of the circumferential end face(s) of the stopper member 122, the stopper member 122 abuts against the pair protuberances 117a of the limning plate 117 to inhibit excess torsion of the first damper unit 102. When the torsion (torsion between the hub member 130 and the side plates 120, 121) is produced in the second damper unit 104, in a radially inwardly offset portion of the circumferential end face(s) of the stopper member 122, the stopper member 122 abuts against a protuberance 130d of the hub member 130 to inhibit excess torsion of the second damper unit 104. The stopper member 122 restricts, by its circumferential end face, the movement of the lining plate 117 in the radial direction, while guiding movement of the lining plate 117 in the circumferential direction. The stopper member 122 operates, by its radially inner end face, to restrict radial movement of the flange part 130b of the hub member 130, as well as to guide the movement in the circumferential direction of the flange part 130b of the hub member 130.

The rivet(s) 123 is a member that interconnects the side plates 120, 121 and the stopper member 122. A plurality, (two in Fig.9,)of the rivets 123 are allocated per each stopper member 122. This allows the stopper member 122 to be connected to the side plates 120, 121 without the stopper member 122 wobbling relative to the side plates 120, 121.

The seat member(s) 124 is a component of the first damper unit 102 accommodated in each of the windows 117b, 120a, 121a formed in the lining plate 117 and in the side plates 120, 121. The seat member is disposed between the circumferential end faces of the windows 117b, 120a, 121a and the end parts of the coil spring 125. The seat member 124 may be formed of resin to reduce wear to the coil spring 125.

The coil spring(s) 125 is a component of the first damper unit 102 accommodated in the windows 117b, 120a, 121a formed in the lining plate 117 and in the side plates 120, 121. The coil spring is in contact with the seat members 124 arranged on its both ends. When the lining plate 117 and the side plates 120, 121 perform relative rotation, the coil spring 125 is contracted to absorb the shock brought about due to differential rotations between the lining plate 117 and the side plates 120, 121. It is observed that the coil length, outside diameter, line diameter and weight of the coil spring(s) 125 is decided, depending on characteristics required of an automobile, in relation with the (second) coil spring(s) 132 of the second damper unit 104. In the drawings, such a coil spring is used which is smaller in outside diameter and lighter in weight than the coil spring 132 to reduce changes in rigidity (elastic modulus) in the regular working range not greater than the engine torque to as small a value as possible.

The thrust member 126 is a block-like member as component of the first hysteresis unit 103, and is disposed between the lining plate 117 and the side plate 120. The thrust member 126 is disposed at a site offset in the circumferential direction from the coil spring 125 of the first damper unit 102. A plurality of the thrust members 126 are arranged opposing the thrust members 127. The thrust member 126 includes a plurality, (two in Fig.9,) of the rotation stops 126a axially movably and circumferentially non-movably engaged with the side plate 120, and is slidably in contact with the lining plate 117. The thrust member 126 is configured to be thrust against the lining plate 117 under the spring action of the side plate 120. This allows the lining plate 117 to be clamped between the thrust members 126, 127 without using Belleville spring.

The thrust member 127 is a block-like member as component of the first hysteresis unit 103, and is disposed between the lining plate 117 and the side plate 121. The thrust member 127 is disposed on a site offset in the circumferential direction from the coil spring 125 of the first damper unit 102. A plurality of the thrust members 127 are arranged opposing the thrust members 126. The thrust member 126 includes a plurality, (two in Fig.9,) of rotation stops 127a axially movably and circumferentially non-movably engaged with the side plate 121, and is slidably in contact with the lining plate 117. The thrust member 127 is configured to be thrust against the lining plate 117 under the spring action of the side plate 121. This allows the lining plate 117 to be clamped between the thrust members 126, 127 without using Belleville spring in the first hysteresis unit 103.

The hub member 130 includes a flange 130b extended from the predetermined outer rim site of a tubular hub member 130a towards the outer periphery, and is a component of the second damper unit 104 and the second hysteresis unit 105. The hub member 130 outputs the rotary power of the second damper unit 104 and the second hysteresis unit 105. The inner peripheral surface of the hub member 130a is formed with inner splined teeth for connection (engagement) with the axis of rotation (outer splined teeth) of a motor generator. The hub member 130a rotatably carries the side plate 120 via the thrust member 134. The outer peripheral end face of the flange 130b includes a plurality of protuberances 130d extending from the outer peripheral end face in the direction of the outer peripheral side. The protuberances 130d operate as the components of the stopper unit 107 and the circumferential end faces thereof may be detachably contacted with the stopper member 122 operative to prevent excess torsion (torsion between the hub member 130 and the side plates 120, 121) in the second damper unit 104. The outer peripheral end face of the flange 130b is guided the inner peripheral surface of the stopper member 122. This restricts movement of the flange part 130b in the radial direction, while guiding its movement in the circumferential direction. As the second damper unit 104, the flange 130b includes a window 130c in which to accommodate the seat member 131 and the coil spring 132 in the portion thereof offset more radially inwardly than the stopper unit 107. The circumferential end face of the window 130c is detachably contacted with the seat member 131. The surface of the flange 130b in [sic. transverse to] the axial direction of the second hysteresis unit 105, offset more radially inwardly than the second damper unit 104, is slidably clamped by the thrust members 134, 135.

The seat member 131 is a component of the second damper unit 104. The seat member(s) 131 is accommodated in the windows 120a, 121a, 130c formed in the side plates 120, 121 and the hub member 130, and is arranged between the circumferential end faces of the windows 120a, 121a, 130c and the ends of the coil spring 132. The seat member 131 may be formed of resin to reduce the wear caused by the coil spring 132.

The coil spring 132 is a component of the second damper unit 104. The coil spring 132 is accommodated in the windows 120a, 121a, 130c formed in the side plates 120, 121 and the hub member 130, and is in contact with the seat members 131 disposed on its both ends. When the side plates 120, 121 and the hub member 130 perform relative rotation, the coil spring 132 is contracted to absorb the shock brought about due to differential rotations between the side plates 120, 121 and the hub member 130. It is observed that the coil length, outside diameter, line diameter and weight of the coil spring 125 are decided, depending on characteristics required of an automobile, in relation to the coil spring 125 of the first damper unit 102. In the drawings, such a coil spring that is greater in outside diameter and in weight than the coil spring 125 of the first damper unit 102 is used to reduce changes in the rigidity (elastic modulus) in the regular working range not greater than the engine torque to as small a value as possible

The floating elastic member 133 is an elastic member that absorbs the shock produced when the torsion of the second damper unit 104 is stopped by the stopper unit 107 with the stopper member 122 abutting against the protuberance 130d of the hub member 130. The floating elastic member 133 is disposed within the inside of helices of the coil spring 132, and absorbs the shock produced when the torsion of the second damper unit 104 is stopped by the stopper unit 107 by the floating elastic member 133 being clamped between the pair seat members 131 when the pair seat members 131 disposed on both ends of the coil spring 132 come close to each other due to torsion of the second damper unit 104.

The thrust member 134 is an annular member as a component of the second hysteresis unit 105. The thrust member 134 is disposed between the side plate 120 and the flange 130b of the hub member 130, and is axially movably and non-rotatably engaged with the side plate 120. The thrust member 134 is axially movably and non-rotatably engaged with the side plate 120 and is slidably pressure-contacted with the flange 130b.

The thrust member 135 is an annular member as a component of the second hysteresis unit 105. The thrust member 135 is disposed between the side plate 121 and the flange 130b of the hub member 130, and is axially movably and non-rotatably engaged with the side plate 121 and with the Belleville spring 136. The thrust member 135 is biased by the Belleville spring 136 from the side of the side plate 121 into pressure contact slidably with the flange 130b.

The Belleville spring 136 is a component of the second hysteresis unit 105, and is a saucer-shaped (conical annular) spring disposed between the thrust member 135 and the side plate 121 to bias the thrust member 135 towards the flange 130b of the hub member 130.

In the Example 2, in which the periodic positions of the coil springs 125 of the first damper unit 102 are set at a predetermined angle offset from the periodic positions of the coil springs 132 of the second damper unit 104, the first damper unit 102 may be arranged offset towards the radially inner side. It is thus possible not to increase the size in the radial direction of the device while maintaining the torsion angle produced by the first and second damper units 102, 104.

Moreover, in the Example 2, in which the lining plate 117 is clamped between the thrust members 126, 127 in the first hysteresis unit 103, without use of the Belleville spring, it becomes possible not to enlarge the device size in the axial direction. Moreover, the first hysteresis unit 103 is arranged on the circumference of the same circle as the first damper units 102, and its components are arranged at a plurality of sites (two or three sites, three sites in Fig.9), circumferentially offset from the coil spring(s) 125 in the first damper unit 102. It is thus possible not to increase the axial device size.

In addition, in the Example 2, the protuberances 113a formed on the outer rim of the pressure plate 113 are engaged in the cut-outs 111a in the outer rim of the cover plate 111 (, which may also be replaced by corresponding cut-outs in the support plate 110). It is thus possible not to enlarge the overall axial size.

Furthermore, in the Example 2, the sole stopper unit 107 may be used as a torsion stopper for the first and second damper units 102, 104, thus saving the space as well as the cost of the device. On the other hand, when the torsion of the first and second damper units 102, 104 is stopped by the stopper unit 107, the direction of the stop load to the stopper member 122 that has stopped the protuberances 117a of the lining plate 117 of the first damper unit 102 is opposite to that of the stop load to the stopper member 122 that has stopped the protuberances 130d of the hub member 130 of the second damper unit 104. It is thus possible to reduce the stress generated in the stopper member 122 to increase the degree of freedom in designing the stopper unit 107. On the other hand, the stopper unit 107 is arranged on the circumference of the same circle as that of the first damper unit 102 and its components are arranged at a plurality of sites (two or three sites and three sites in Fig.9) offset in the circumferential direction from the coil springs 125 of the first damper unit 102. It is thus possible not to enlarge the radial size of the device.

It is observed that, as regards the above mentioned second aspect of the present invention, the following needs to be set out in connection with the 'Background' and the 'Technical Problem'.

### (Background in connection with the second aspect)

The torsion damper device is provided on a motive power transmitting path between the engine and the speed-change transmission. The torsion damper device operates in such a manner that, when the clutch is engaged, the torsion between a rotary member to which the rotary torque is transmitted from the engine and another rotary member which transmits the rotary torque to the speed-change transmission is buffered by e.g., the coil springs to absorb or suppress the torque fluctuations between the engine and the speed-change transmission. The dimension of the torsion damper device, laden on an automobile, has to be limited. Under such dimensional limitation, attempts have been made in the conventional torsion damper device to widen the torsion angle between two rotary members such as to improve the attenuation performance.

In Patent Literature 3, for example, there is disclosed a torsion damper disc in which a flanged hub is elastically connected to a plate via a torsion member in the circumferential direction of the disc. The plate is arranged about a flanged hub so as to face the flange of the hub. The torsion damper disc includes a seat disposed between the torsion member and the plate and flanged hub. The seat includes a lateral side abutting against an end face of the torsion member along the circumferential direction of the disc and an opposite lateral side carrying thereon a protuberant retention part abutting against the plate and the flange of the flanged hub, and a protuberant guide part. The protuberant retention part is fitted to and retained by the flange of the flanged hub, with the protuberant guide part clamping the flange of the flanged hub along the disc axis direction. In this torsion damper disc, the torsion member (coil spring) is placed in a cut-out formed at a position offset radially outwardly of the flange, and the torsion member is of a longer length, thereby increasing the torsion angle between the flanged hub and the plate.

In Patent Literature 4, there is disclosed a torsion oscillation damper, in particular a torsion oscillation damper for a automobile clutch, with the torsion oscillation damper including an input part, an output part and two dampers connected in cascade between the input and output parts. These two dampers are a first damper having a power accumulator of low elastic modulus and a second damper having a power accumulator of high elastic modulus. The power accumulator of the first damper allows for a total angle of rotation 47 of at least 20° between the input and output parts, while generating the maximum torque of 4 to 20 Nm. The power accumulator of the second damper allows for an angle of rotation of at least 15° between the input and output parts, while exhibiting the torsion strength of 5 to 40 Nm/ degree (°). In this torsion oscillation damper, an arcuately shaped coil spring is used for the power accumulator of the first damper. This increases the length of the spring of the first damper to increase (widen) its torsion angle. In the Patent Literature 5, as in the Patent Literature 4, an arcuately-shaped coil spring is used in a power accumulator of the first damper.

### [Technical problem encountered in the invention of the second aspect]

In the torsion damper disc, disclosed in the Patent literature 3, the torsion member can be arranged at a radially outer site. However, the angle of relative rotation between the flanged hub and the plate is restricted by a stamped portion of the plate (the stamped portion in the vicinity of a pin interconnecting two plates) abutting against the circumferential end of the flange cutout (another cut-out formed at a site lying between cutouts, in the flange, which accommodate the torsion member). It is thus necessary to restrict the maximum angle of relative rotation between the flanged hub and the plate by a circumferential space between the flange cutouts. It is thus necessary that the circumferential length between the flange cutouts to accommodate the torsion member is equivalent to the angle of the relative rotation. The length of the torsion member accommodated in the cutouts cannot be set to a sufficiently long length to render it difficult to increase the torsion angle.

On the other hand, the torsion oscillation dampers of the Patent Literatures 4, 5 use an arcuately-shaped coil spring. Hence, these torsion oscillation dampers suffer the problem that the coil spring becomes flexed radially outwardly during contraction of the first damper into contact with a member (ring-shaped member) disposed radially outwardly thus generating frictional resistance to deteriorate the damper's attenuation performance. In addition, in the second damper, a spring is disposed in an enclosure-like cutout in the flange. Hence, the first damper, arranged more radially inwardly than the second damper, needs to be offset further inwardly to render it difficult to increase the torsion angle.

It is a main object of the present invention (object associated with the second aspect) to provide a torsion damper device which contributes to increasing the torsion angle.

It is observed that the object associated with the second aspect may be accomplished by the torsion damper device (torsion fluctuation absorbing device) according to the second aspect of the present invention.

The particular exemplary embodiments or examples may be modified or adjusted within the scope of the entire disclosure of the present invention, inclusive of claims, based on the fundamental technical concept of the invention. Further, a variety of combinations or selection of elements disclosed herein may be made within the framework of the claims. That is, the present invention may encompass various modifications or variations that may occur to those skilled in the art in accordance with and within the gamut of the entire disclosure of the present invention, inclusive of claims and the technical concept of the present invention.

## Claims

1. A torque fluctuation absorbing device, comprising:
at least one first damper unit (102) that absorbs torque fluctuations caused by torsion between a first rotary member (117) and a second rotary member (120,121); and
at least one second damper unit (104) that absorbs torque fluctuations caused by torsion between the second rotary member (120,121) and a third rotary member (130);
the at least one first damper unit (102) including a plurality of first coil springs (125) arranged at a first predetermined spacing along a circumferential direction; the at least one first damper unit (102) buffering torsion between the first and second rotary members (117,120,121) by the plurality of the first coil springs (125);
the at least one second damper unit (104) being arranged more radially inwardly than the at least one first damper unit (102), and including a plurality of second coil springs (132) arranged at a second predetermined spacing along a circumferential direction; the at least one second damper unit (104) buffering torsion between the second and third rotary members (120, 121, 130) by the plurality of the second coil springs (132);
positions of the plurality of the first coil springs (125) being offset a predetermined angle along the circumferential direction from positions of the plurality of the second coil springs (132);
wherein the torque fluctuation absorbing device further comprises:
a first hysteresis unit (103) that absorbs torque fluctuations caused due to torsion between the first and second rotary members (117,120,121); wherein
the second rotary member (120,121) is arranged on both sides axially of the first rotary member (117);
the first hysteresis unit (103) including a plurality of thrust members (126, 127) periodically arranged divided at a plurality of sites on a circumference of a same circle as the at least one first damper unit (102); the thrust members (126,127) being disposed circumferentially offset from the first coil springs (125) in the at least one first damper unit (102);
the plurality of the thrust members (126,127) being arranged between the first and second rotary members (117,120,121) and being locked against rotation relative to the second rotary member (120,121); the thrust members (126,127) being biased towards the first rotary member (117) under spring action of the second rotary member (120,121); and
the first rotary member (117) being slidably clamped by the plurality of the thrust members (126, 127).

2. The torque fluctuation absorbing device according to claim 1, wherein,
the at least one first damper unit (102) includes two or three of the first coil springs (125); and
the at least one second damper unit (104) including two or three of the second coil springs (132).

3. The torque fluctuation absorbing device according to claim 1, wherein,
the at least one first damper unit (102) includes three of the first coil springs (125);
the at least one second damper unit (104) including three of the second coil springs (132);
the three first coil springs (125) being arranged offset at an angle of 120° from one another about an axis of rotation as center;
the three second coil springs (132) being arranged offset at an angle of 120° from one another about the axis of rotation as center; and
the second coil springs (132) being arranged offset at an angle of 60° from the first coil springs (125) about the axis of rotation as center.

4. The torque fluctuation absorbing device according to any one of claims 1 to 3, wherein
the second coil springs (132) are arranged between neighboring ones of the first coil springs (125) more radially inwardly than the first coil springs (125).

5. The torque fluctuation absorbing device according to any one of claims 1 to 4, wherein,
the second coil springs (132) are greater in diameter than the first coil springs (125).

6. The torque fluctuation absorbing device according to any one of claims 1 to 5, wherein
the second coil springs (132) are heavier in weight than the first coil springs (125).

7. The torque fluctuation absorbing device according to any one of claims 1 to 6 further comprising:
at least one stopper unit (107) that inhibits excess torsion of both the first and second damper units (102, 104);
the at least one stopper unit (107) being fastened to the second rotary member (120,121);
the first rotary member (117) including a first protuberance (117a) that is formed radially inwardly and that can abut against a circumferential end face of the stopper unit (107) under torsion between the first and second rotary members (117,120,121); and
the third rotary member (130) including a second protuberance (130d) that is formed radially outwardly and that can abut against a circumferential end face of the stopper unit (107) due to torsion between the third and second rotary members (130, 120, 121) at a site disposed more radially inwardly than the first protuberance (117a).

8. The torque fluctuation absorbing device according to claim 7, wherein
the at least one stopper unit (107) is periodically arranged divided at a plurality of sites on the circumference of the same circle as the at least one first damper unit (102); the at least one stopper unit (107) being arranged circumferentially offset from the first coil springs (125) in the at least one first damper unit.

9. The torque fluctuation absorbing device according to claim 8, wherein
the stopper unit (107) is disposed more radially inwardly than the thrust member (126, 127).

10. The torque fluctuation absorbing device according to any one of claims 1 to 9, further comprising:
a limiter unit (106) that produces slip at least when the first and second damper units (102,104) can no longer absorb the torque fluctuations;
the limiter unit (106) including:
two friction members (115,116) fastened to both sides of the first rotary member (117);
a cover plate (111) slidably pressure-contacted with one of the friction members (116);
a pressure plate (113) slidably pressure-contacted with the other of the friction members (115);
a Belleville spring (114) that biases the pressure plate (113) towards the cover plate (111);
a support plate (110) that carries the Belleville spring (114); and
at least one rivet (112) that interconnects the cover plate (111) and the support plate (110);
the pressure plate (113) including a third protuberance (113a) extending towards an outer peripheral side from an outer peripheral end face; and
one or both of the cover plate (111) and the support plate (110) including a cutout axially movably and non-rotatably engaging with the third protuberance (113a).

11. The torque fluctuation absorbing device comprising:
at least one first damper unit (3) that absorbs torque fluctuations caused by torsion between a first rotary member (15,16) and a second rotary member (18,25,26); and
at least one second damper unit (2) that absorbs torque fluctuations caused by torsion between the second rotary member (18,25,26) and a third rotary member (27);
the at least one first damper unit (3) including a plurality of first coil springs (19) arranged at a first predetermined spacing along a circumferential direction; the at least one first damper unit (3) buffering torsion between the first and second rotary members (15,16,18,25,26) by the plurality of the first coil springs (19);
the at least one second damper unit (2) being arranged more radially inwardly than the at least one first damper unit (3), and including a plurality of second coil springs (28,29) arranged at a second predetermined spacing along a circumferential direction; the at least one second damper unit (2) buffering torsion between the second and third rotary members (18,25,26,27) by the plurality of the second coil springs (28,29);
positions of the plurality of the first coil springs (19) being offset a predetermined angle along the circumferential direction from positions of the plurality of the second coil springs (28,29);
wherein,
the first damper unit (3) includes at least one first coil spring (19) and at least one third coil spring (21) differing in length from each other;
the at least one first coil spring (19) and the at least one third coil spring (21) being alternately arranged along the circumferential direction of the first damper unit (3); the first coil spring (19) and the third coil spring (21) buffering the torsion between the first rotary member (15,16) and the second rotary member (18,25,26);
the at least one third coil spring (21) being shorter in length than the at least one first coil spring (19); with respect to the radial direction of the at least one first damper unit (3), a portion of the at least one third coil spring (21) disposed inwardly being disposed more radially outwardly of the at least one first damper unit (3) than a portion of the at least one first coil spring (19) disposed inwardly; and
with respect to the circumferential direction of the at least one second damper unit (2), the at least one second coil spring (28,29) being disposed between the at least one first coil spring (19) and the at least one third coil spring (21) neighboring to each other; the at least one second coil spring (28,29) being disposed more radially inwardly of the at least one first damper unit (3) than the at least one first coil spring (19) and the at least one third coil spring (21);
the torque fluctuation absorbing device further comprising:
a pair of first seat members (22) arranged at both longitudinal ends of the at least one third coil spring (21); the first seat members (22) being retained by one of the first and second rotary members (15, 16, 18, 25, 26) in case of occurrence of torsion between the first and second rotary members (15,16,18,25,26);
an elastic member (23) disposed inside the third coil spring (21); and
the elastic member (23) allowing torsion between the first and second rotary members (15,16,18,25,26) until abutment thereof with the pair of the first seat members (22) in case of the occurrence of torsion between the first and second rotary members (15, 16, 18, 25, 26).

12. The torque fluctuation absorbing device according to claim 11, wherein,
the at least one second damper unit (2) includes four of the second coil springs (28,29);
the at least one first damper unit (3) including two of the first coil springs (19) and two of the third coil springs (21);
the two first coil springs (19) being arranged offset 180 ° relative to one another about the axis of rotation as center;
the two third coil springs (21) being arranged offset 180 ° relative to one another about the axis of rotation as center; and
the first coil springs (19) being arranged offset by 90 ° from the third coil springs (21) about the axis of rotation as center.

13. The torque fluctuation absorbing device according to claim 11 or 12, wherein,
the second rotary member (18,25,26) includes a ring member (25,26) carrying the second coil springs (28,29) and a flange member (18) engaging with the ring member (25,26); and
the third rotary member including a plate member (27) detachably engaged with the at least one second coil spring (28,29).

14. The torque fluctuation absorbing device according to claim 13, wherein,
the second coil springs (28,29) are arranged between the ring member (25,26) and the plate member (27).

15. The torque fluctuation absorbing device according to any one of claims 10 to 14, further comprising:
a pair of second seat members (20) arranged on both ends of the at least one first coil spring (28,29); the second seat members (20) being retained by one out of the first rotary member (15,16) and the second rotary member (18,25,26) when torsion has occurred between the first and second rotary members (15, 16, 18, 25, 26); and
each second seat member (20) including a protuberance (20a) extending into the inside of the at least one first coil spring (19); in case of occurrence of torsion between the first and second rotary members (15,16,18,25,26), the torsion being allowed between the first and second rotary members (15, 16, 18, 25, 26) until the protuberances (20a) abut against each other.

16. The torque fluctuation absorbing device according to any one of claims 10 to 15, wherein,
the plurality of the second coil springs (28,29) are each formed of at least one 21 st coil spring and at least one 22nd coil spring differing in length from each other;
the at least one 22nd coil spring being shorter in length than the 21 st coil spring;
in the at least one second damper unit (2), just the at least one 21st coil spring is in operation for initial torsion between the second and third rotary members (18,25,26,27); for later torsion between the second and third rotary members(18,25,26,27), the at least one 21st coil spring and 22nd coil spring are in operation.

17. The torque fluctuation absorbing device according to any one of claims 1 to 16, wherein,
the second coil spring (28,29) extends linearly with respect to a longitudinal direction of the second coil spring (28,29).

## Patentansprüche

1. Einrichtung zur Dämpfung einer Drehmomentschwankung, mit:
wenigstens einer ersten Dämpfungseinheit (102), die Drehmomentschwankungen absorbiert, die durch Verdrehung zwischen einem ersten Drehelement (117) und einem zweiten Drehelement (120, 121) verursacht werden; und
wenigstens einer zweiten Dämpfungseinheit (104), die Drehmomentschwankungen absorbiert, die durch Verdrehung zwischen dem zweiten Drehelement (120, 121) und einem dritten Drehelement (130) verursacht werden;
wobei die wenigstens eine erste Dämpfungseinheit (102) eine Vielzahl von ersten Spiralfedern (125) aufweist, die in einem ersten vorgegebenen Abstand entlang einer Umfangsrichtung angeordnet sind; wobei die wenigstens eine erste Dämpfungseinheit (102) eine Verdrehung zwischen dem ersten und dem zweiten Drehelement (117, 120, 121) durch die Vielzahl der ersten Spiralfedern (125) puffert;
wobei die wenigstens eine zweite Dämpfungseinheit (104) radial weiter einwärts angeordnet ist als die wenigstens eine erste Dämpfungseinheit (102) und eine Vielzahl von zweiten Spiralfedern (132) aufweist, die in einem zweiten vorgegebenen Abstand entlang einer Umfangsrichtung angeordnet sind, wobei die wenigstens eine zweite Dämpfungseinheit (104) eine Verdrehung zwischen dem zweiten und dem dritten Drehelement (120, 121, 130) durch die Vielzahl der zweiten Spiralfedern (132) puffert;
wobei Positionen der Vielzahl der ersten Spiralfedern (125) um einen vorgegebenen Winkel entlang der Umfangsrichtung von Positionen der Vielzahl der zweiten Spiralfedern (132) versetzt sind;
wobei die Einrichtung zur Dämpfung einer Drehmomentschwankung weiter enthält:
eine erste Hystereseeinheit (103), die Drehmomentschwankungen absorbiert, die in Folge einer Verdrehung zwischen dem ersten und dem zweiten Drehelement (117, 120, 121) verursacht werden; bei der
das zweite Drehelement (120, 121) axial auf beiden Seiten des ersten Drehelements (117) angeordnet ist;
die erste Hystereseeinheit (103) eine Vielzahl von Schubkraftelementen (126, 127) aufweist, die regelmäßig an einer Vielzahl von Stellen auf einem Umfang desselben Kreises wie die wenigstens eine erste Dämpfungseinheit (102) geteilt angeordnet sind; wobei die Schubkraftelemente (126, 127) über den Umfang von den ersten Spiralfedern (125) in der wenigstens einen ersten Dämpfungseinheit (102) versetzt angeordnet sind;
wobei die Vielzahl der Schubkraftelemente (126, 127) zwischen dem ersten und dem zweiten Drehelement (117, 120, 121) angeordnet ist und gegen eine Drehung relativ zu dem zweiten Drehelement (120, 121) verriegelt sind; wobei die Schubkraftelemente (126, 127) in Richtung des ersten Drehelements (117) unter einem Federdruck des zweiten Drehelements (120, 121) vorgespannt sind; und
wobei das erste Drehelement (117) gleitbar von der Vielzahl der Schubkraftelemente (126, 127) geklemmt ist.

2. Einrichtung zur Dämpfung einer Drehmomentschwankung nach Anspruch 1, wobei
die wenigstens eine erste Dämpfungseinheit (102) zwei oder drei der ersten Spiralfedern (125) aufweist; und
die wenigstens eine zweite Dämpfungseinheit (104) zwei oder drei der zweiten Spiralfedern (132) aufweist.

3. Einrichtung zur Dämpfung einer Drehmomentschwankung nach Anspruch 1, wobei
die wenigstens eine erste Dämpfungseinheit (102) drei der ersten Spiralfedern (125) aufweist;
die wenigstens eine zweite Dämpfungseinheit (104) drei der zweiten Spiralfedern (132) aufweist;
die drei ersten Spiralfedern (125) in einem Winkel von 120° voneinander um eine Drehachse als eine Mitte versetzt angeordnet sind;
die drei zweiten Spiralfedern (132) um einen Winkel von 120° voneinander um die Drehachse als eine Mitte versetzt angeordnet sind; und
die zweiten Spiralfedern (132) um einen Winkel von 60° von den ersten Spiralfedern (125) um die Drehachse als eine Mitte versetzt angeordnet sind.

4. Einrichtung zur Dämpfung einer Drehmomentschwankung nach einem der Ansprüche 1 bis 3, wobei
die zweiten Spiralfedern (132) zwischen benachbarten ersten Spiralfedern (125) radial weiter einwärts als die ersten Spiralfedern (125) angeordnet sind.

5. Einrichtung zur Dämpfung einer Drehmomentschwankung nach einem der Ansprüche 1 bis 4, wobei
die zweiten Spiralfedern (132) einen größeren Durchmesser aufweisen als die ersten Spiralfedern (125).

6. Einrichtung zur Dämpfung einer Drehmomentschwankung nach einem der Ansprüche 1 bis 5, wobei
die zweiten Spiralfedern (132) ein schwereres Gewicht aufweisen als die ersten Spiralfedern (125).

7. Einrichtung zur Dämpfung einer Drehmomentschwankung nach einem der Ansprüche 1 bis 6, ferner mit
wenigstens einer Anschlageinheit (107), die eine übermäßige Verdrehung sowohl der ersten als auch der zweiten Dämpfungseinheit (102, 104) verhindert;
wobei die wenigstens eine Anschlageinheit (107) an dem zweiten Drehelement (120, 121) befestigt ist;
wobei das erste Drehelement (117) eine erste Ausstülpung (117a) aufweist, die radial einwärts ausgebildet ist und die an einer Umfangsendfläche der Anschlageinheit (107) bei einer Drehung zwischen dem ersten und dem zweiten Drehelement (117, 120, 121) anliegen kann; und
das dritte Drehelement (130) eine zweite Ausstülpung (130d) aufweist, die radial auswärts ausgebildet ist und die an einer Umfangsendfläche der Anschlageinheit (107) infolge einer Verdrehung zwischen dem dritten und dem zweiten Drehelement (130, 120, 121) an einer Stelle anliegen kann, die radial weiter einwärts angeordnet ist als die erste Ausstülpung (117a).

8. Einrichtung zur Dämpfung einer Drehmomentschwankung nach Anspruch 7, wobei
die wenigstens eine neue Anschlageinheit (107) regelmäßig an einer Vielzahl von Stellen auf dem Umfang desselben Kreises wie die wenigstens eine erste Dämpfungseinheit (102) angeordnet ist; wobei die wenigstens eine Anschlageinheit (107) von den ersten Spiralfedern (125) in der wenigstens einen Dämpfungseinheit über den Umfang versetzt angeordnet ist.

9. Einrichtung zur Dämpfung einer Drehmomentschwankung nach Anspruch 8, wobei
die Anschlageinheit (107) radial weiter einwärts angeordnet ist als das Schubkraftelement (126, 127).

10. Einrichtung zur Dämpfung einer Drehmomentschwankung nach einem der Ansprüche 1 bis 9, ferner mit:
einer Begrenzereinheit (106), die ein Rutschen wenigstens dann erzeugt, wenn die erste und die zweite Dämpfungseinheit (102, 104) die Drehmomentschwankungen nicht länger absorbieren kann;
wobei die Begrenzereinheit (106) aufweist:
zwei Reibungselemente (115, 116), die an beiden Seiten des ersten Drehelements (117) befestigt sind;
eine Abdeckplatte (111), die mit einem der Reibungselemente (116) gleitbar in Druckkontakt ist;
eine Druckplatte (113), die mit dem anderen der Reibungselemente (115) gleitbar in Druckkontakt ist;
eine Belleville-Feder (114), die die Druckplatte (113) in Richtung der Abdeckplatte (111) vorspannt;
eine Stützplatte (110), die die Belleville-Feder (114) trägt; und
wenigstens eine Niete (112), die die Abdeckplatte (111) und die Stützplatte (110) verbindet;
wobei die Druckplatte (113) eine dritte Ausstülpung (113a) aufweist, die sich in Richtung einer äußeren Umfangsseite von einer äußeren Umfangsendfläche erstreckt; und
wobei eine oder beide aus der Abdeckplatte (111) und der Stützplatte (110) eine Aussparung aufweisen, die axial beweglich ist und nicht drehbar mit der dritten Ausstülpung (113a) in Eingriff steht.

11. Einrichtung zur Dämpfung einer Drehmomentschwankung, mit:
wenigstens einer ersten Dämpfungseinheit (3), die Drehmomentschwankungen absorbiert, die durch Verdrehung zwischen einem ersten Drehelement (15, 16) und einem zweiten Drehelement (18, 25, 26) verursacht werden; und
wenigstens einer zweiten Dämpfungseinheit (2), die Drehmomentschwankungen absorbiert, die durch Verdrehung zwischen dem zweiten Drehelement (18, 25, 26) und einem dritten Drehelement (27) verursacht werden;
wobei die wenigstens eine erste Dämpfungseinheit (3) eine Vielzahl von ersten Spiralfedern (19) aufweist, die in einem ersten vorgegebenen Abstand entlang einer Umfangsrichtung angeordnet sind; wobei die wenigstens eine erste Dämpfungseinheit (3) eine Verdrehung zwisehen dem ersten und dem zweiten Drehelement (15, 16, 18, 25, 26) durch die Vielzahl der ersten Spiralfedern (19) puffert;
wobei die wenigstens eine zweite Dämpfungseinheit (2) radial weiter einwärts angeordnet ist als die wenigstens eine erste Dämpfungseinheit (3) und eine Vielzahl von zweiten Spiralfedern (28, 29) aufweist, die in einem zweiten vorgegebenen Abstand entlang einer Umfangsrichtung angeordnet sind, wobei die wenigstens eine zweite Dämpfungseinheit (2) eine Verdrehung zwischen dem zweiten und dem dritten Drehelement (18, 25, 26, 27) durch die Vielzahl der zweiten Spiralfedern (28, 29) puffert;
wobei Positionen der Vielzahl der ersten Spiralfedern (19) um einen vorgegebenen Winkel entlang der Umfangsrichtung von Positionen der Vielzahl der zweiten Spiralfedern (28, 29) versetzt sind;
wobei
die erste Dämpfungseinheit (3) wenigstens eine erste Spiralfeder (19) und wenigstens eine dritte Spiralfeder (21) aufweist, die sich in ihrer Länge voneinander unterscheiden;
wobei die wenigstens eine erste Spiralfeder (19) und die wenigstens eine dritte Spiralfeder (21) abwechselnd entlang der Umfangsrichtung der ersten Dämpfungseinheit (3) angeordnet sind; wobei die erste Spiralfeder (19) und die dritte Spiralfeder (21) die Verdrehung zwischen dem ersten Drehelement (15, 16) und dem zweiten Drehelement (18, 25, 26) puffern;
wobei die wenigstens eine dritte Spiralfeder (21) in ihrer Länge kürzer ist als die wenigstens eine erste Spiralfeder (19); wobei, mit Bezug auf die radiale Richtung der wenigstens einen Dämpfungseinheit (3), ein Bereich der wenigstens einen dritten Spiralfeder (21), die einwärts angeordnet ist, radial weiter auswärts der wenigstens einen ersten Dämpfungseinheit (3) angeordnet ist als ein Bereich der wenigstens einen ersten Spiralfeder (19), die einwärts angeordnet ist; und
wobei, mit Bezug auf die Umfangsrichtung der wenigstens einen zweiten Dämpfungseinheit (2), die wenigstens eine zweite Spiralfeder (28, 29) zwischen der wenigstens einen ersten Spiralfeder (19) und der wenigstens einen dritten Spiralfeder (21) angeordnet ist, die benachbart zueinander sind; wobei die wenigstens eine zweite Spiralfeder (28, 29) radial weiter einwärts der wenigstens einen ersten Dämpfungseinheit (3) angeordnet ist als die wenigstens eine erste Spiralfeder (19) und die wenigstens eine dritte Spiralfeder (21);
wobei die Einrichtung zur Dämpfung einer Drehmomentschwankung ferner aufweist:
ein Paar erster Sitzelemente (22), das an beiden Längsenden der wenigstens einen dritte Spiralfeder (21) angeordnet ist; wobei die ersten Sitzelemente (22) von einem aus dem ersten und zweiten Drehelement (15, 16, 18, 25, 26) gehalten werden, im Falle, dass eine Verdrehung zwischen dem ersten und dem zweiten Drehelement (15, 16, 18, 25, 26) auftritt;
ein elastisches Element (23), das im Inneren der dritten Spiralfeder (21) angeordnet ist; und
wobei das elastische Element (23) eine Verdrehung zwischen dem ersten und dem zweiten Drehelement (15, 16, 18, 25, 26) zulässt bis zu einer Anlage davon an dem Paar der ersten Sitzelemente (22) im Falle, dass eine Verdrehung zwischen dem ersten und dem zweiten Drehelement (15, 16, 18, 25, 26) auftritt.

12. Einrichtung zur Dämpfung einer Drehmomentschwankung nach Anspruch 11, wobei
die wenigstens eine zweite Dämpfungseinheit (2) vier der zweiten Spiralfedern (28, 29) aufweist;
die wenigstens eine erste Dämpfungseinheit (3) zwei der ersten Spiralfedern (19) und zwei der dritten Spiralfedern (21) aufweist;
die zwei ersten Spiralfedern (19) um 180° relativ zueinander um die Drehachse als Mitte versetzt sind;
wobei die zwei dritten Spiralfedern (21) um 180° relativ zueinander um die Drehachse als Mitte angeordnet sind; und
die ersten Spiralfedern (19) um 90° von den dritten Spiralfedern (21) um die Drehachse als Mitte versetzt angeordnet sind.

13. Einrichtung zur Dämpfung einer Drehmomentschwankung nach Anspruch 11 oder 12, wobei
das zweite Drehelement (18, 25, 26) ein Ringelement (25, 26), das die zweiten Spiralfedern (28, 29) trägt, und ein Flanschelement (18) aufweist, das mit dem Ringelement (25, 26) in Eingriff ist; und
das dritte Drehelement ein Plattenelement (27) aufweist, das lösbar mit der wenigstens einen zweiten Spiralfeder (28, 29) in Eingriff ist.

14. Einrichtung zur Dämpfung einer Drehmomentschwankung nach Anspruch 13, wobei
die zweiten Spiralfedern (28, 29) zwischen dem Ringelement (25, 26) und dem Plattenelement (27) angeordnet sind.

15. Einrichtung zur Dämpfung einer Drehmomentschwankung nach einem der Ansprüche 10 bis 14, ferner mit:
einem Paar zweiter Sitzelemente (20), das an beiden Enden der wenigstens einen ersten Spiralfeder (28, 29) angeordnet ist; wobei die zweiten Sitzelemente (20) von einem aus dem ersten Drehelement (15, 16) und dem zweiten Drehelement (18, 25, 26) gehalten werden, wenn eine Verdrehung zwischen dem ersten und dem zweiten Drehelement (15, 16, 18, 25, 26) aufgetreten ist; und
wobei jedes zweite Sitzelement (20) eine Ausstülpung (20a) aufweist, die sich in das Innere der wenigstens einen ersten Spiralfeder (19) erstreckt; wobei im Falle, dass eine Verdrehung zwischen dem ersten und dem zweiten Drehelement (15, 16, 18, 25, 26) auftritt, die Verdrehung zwischen dem ersten und dem zweiten Drehelement (15, 16, 18, 25, 26) möglich ist, bis die Ausstülpungen (20a) aneinander anliegen.

16. Einrichtung zur Dämpfung einer Drehmomentschwankung nach einem der Ansprüche 10 bis 15, wobei
die Vielzahl der zweiten Spiralfedern (28, 29) jeweils von wenigstens einer 21 sten Spiralfeder und wenigstens einer 22sten Spiralfeder gebildet wird, die sich in ihrer Länge voneinander unterscheiden;
wobei die wenigstens eine 22ste Spiralfeder in ihrer Länge kürzer ist als die 21 ste Spiralfeder;
in der wenigstens einen zweiten Dämpfungseinheit (2) lediglich die wenigstens eine 21 ste Spiralfeder für eine Start-Verdrehung zwischen dem zweiten und dem dritten Drehelement (18, 25, 26, 27) in Betrieb ist; für eine spätere Verdrehung zwischen dem zweiten und dem dritten Drehelement (18, 25, 26, 27) die wenigstens eine 21ste Spiralfeder und die 22ste Spiralfeder in Betrieb sind.

17. Einrichtung zur Dämpfung einer Drehmomentschwankung nach einem der Ansprüche 1 bis 16, wobei
die zweite Spiralfeder (28, 29) sich linear mit Bezug auf eine Längsrichtung der zweiten Spiralfeder (28, 29) erstreckt.

## Revendications

1. Dispositif d'absorption de fluctuation de couple, comprenant :
au moins une première unité d'amortissement (102) qui absorbe des fluctuations de couple provoquées par une torsion entre un premier élément rotatif (117) et un deuxième élément rotatif (120, 121) ; et
au moins une seconde unité d'amortissement (104) qui absorbe des fluctuations de couple provoquées par une torsion entre le deuxième élément rotatif (120, 121) et un troisième élément rotatif (130) ;
l'au moins une première unité d'amortissement (102) comprenant une pluralité de premiers ressorts hélicoïdaux (125) agencés selon un premier espacement prédéterminé le long d'une direction circonférentielle ; l'au moins une première unité d'amortissement (102) amortissant une torsion entre les premier et deuxième éléments rotatifs (117, 120, 121) par la pluralité de premiers ressorts hélicoïdaux (125) ;
l'au moins une seconde unité d'amortissement (104) étant agencée plus radialement vers l'intérieur que l'au moins une première unité d'amortissement (102), et comprenant une pluralité de deuxièmes ressorts hélicoïdaux (132) agencés selon un second espacement prédéterminé le long d'une direction circonférentielle ; l'au moins une seconde unité d'amortissement (104) amortissant une torsion entre les deuxième et troisième éléments rotatifs (120, 121, 130) par la pluralité de deuxièmes ressorts hélicoïdaux (132) ;
des positions de la pluralité de premiers ressorts hélicoïdaux (125) étant décalées selon un premier angle prédéterminé le long de la direction circonférentielle par rapport à des positions de la pluralité de deuxièmes ressorts hélicoïdaux (132) ;
dans lequel le dispositif d'absorption de fluctuation de couple comprend en outre :
une première unité d'hystérésis (103) qui absorbe des fluctuations de couple dues à une torsion entre les premier et deuxième éléments rotatifs (117, 120, 121) ; dans lequel
le deuxième élément rotatif (120, 121) est agencé des deux côtés axialement du premier élément rotatif (117) ;
la première unité d'hystérésis (103) comprenant une pluralité d'éléments de poussée (126, 127) périodiquement agencés divisés au niveau d'une pluralité de sites sur une circonférence d'un même cercle que l'au moins une première unité d'amortissement (102) ; les éléments de poussée (126, 127) étant disposés décalés de façon circonférentielle par rapport à des premiers ressorts hélicoïdaux (125) dans l'au moins une première unité d'amortissement (102) ;
la pluralité d'éléments de poussée (126, 127) étant agencés entre les premier et deuxième éléments rotatifs (117, 120, 121) et étant verrouillés contre une rotation par rapport au deuxième élément rotatif (120, 121) ; les éléments de poussée (126, 127) étant sollicités en direction du premier élément rotatif (117) sous une action de ressort du deuxième élément rotatif (120, 121) ; et
le premier élément rotatif (117) étant serré de façon coulissante par la pluralité d'éléments de poussée (126, 127).

2. Dispositif d'absorption de fluctuation de couple selon la revendication 1, dans lequel,
l'au moins une première unité d'amortissement (102) comprend deux ou trois des premiers ressorts hélicoïdaux (125) ; et
l'au moins une seconde unité d'amortissement (104) comprend deux ou trois des deuxièmes ressorts hélicoïdaux (132).

3. Dispositif d'absorption de fluctuation de couple selon la revendication 1, dans lequel,
l'au moins une première unité d'amortissement (102) comprend trois des premiers ressorts hélicoïdaux (125) ;
l'au moins une seconde unité d'amortissement (104) comprend trois des deuxièmes ressorts hélicoïdaux (132) ;
les trois premiers ressorts hélicoïdaux (125) étant agencés décalés selon un angle de 120° les uns par rapport aux autres autour d'un axe de rotation comme centre ;
les trois deuxièmes ressorts hélicoïdaux (132) étant agencés décalés selon un angle de 120 ° les uns par rapport aux autres autour de l'axe de rotation comme centre ; et
les deuxièmes ressorts hélicoïdaux (132) étant agencés décalés selon un angle de 60 ° par rapport aux premiers ressorts hélicoïdaux (125) autour de l'axe de rotation comme centre.

4. Dispositif d'absorption de fluctuation de couple selon l'une quelconque des revendications 1 à 3, dans lequel
les deuxièmes ressorts hélicoïdaux (132) sont agencés entre des premiers ressorts hélicoïdaux voisins (125) plus radialement vers l'intérieur que les premiers ressorts hélicoïdaux (125).

5. Dispositif d'absorption de fluctuation de couple selon l'une quelconque des revendications 1 à 4, dans lequel
les deuxièmes ressorts hélicoïdaux (132) présentent un diamètre supérieur à celui des premiers ressorts hélicoïdaux (125).

6. Dispositif d'absorption de fluctuation de couple selon l'une quelconque des revendications 1 à 5, dans lequel
les deuxièmes ressorts hélicoïdaux (132) sont plus lourds que les premiers ressorts hélicoïdaux (125).

7. Dispositif d'absorption de fluctuation de couple selon l'une quelconque des revendications 1 à 6 comprenant en outre :
au moins une unité d'arrêt (107) qui empêche toute torsion excédentaire des première et seconde unités d'amortissement (102, 104) ;
l'au moins une unité d'arrêt (107) étant fixée au deuxième élément rotatif (120, 121) ;
le premier élément rotatif (117) comprenant une première protubérance (117a) qui est formée radialement vers l'intérieur et qui peut venir buter contre une face d'extrémité circonférentielle de l'unité d'arrêt (107) sous une torsion entre les premier et deuxième éléments rotatifs (117, 120, 121) ; et
le troisième élément rotatif (130) comprenant une deuxième protubérance (130d) qui est formée radialement vers l'extérieur et qui peut venir buter contre une face d'extrémité circonférentielle de l'unité d'arrêt (107) en raison d'une torsion entre les troisième et deuxième éléments rotatifs (130, 120, 121) au niveau d'un site disposé plus radialement vers l'intérieur que la première protubérance (117a).

8. Dispositif d'absorption de fluctuation de couple selon la revendication 7, dans lequel
l'au moins une unité d'arrêt (107) est périodiquement agencée divisée au niveau d'une pluralité de sites sur la circonférence du même cercle que l'au moins une première unité d'amortissement (102) ; l'au moins une unité d'arrêt (107) étant agencée décalée de façon circonférentielle par rapport aux premiers ressorts hélicoïdaux (125) dans l'au moins une première unité d'amortissement.

9. Dispositif d'absorption de fluctuation de couple selon la revendication 8, dans lequel
l'unité d'arrêt (107) est disposée plus radialement vers l'intérieur que l'élément de poussée (126, 127).

10. Dispositif d'absorption de fluctuation de couple selon l'une quelconque des revendications 1 à 9, comprenant en outre :
une unité de limitation (106) qui produit un écart au moins lorsque les première et seconde unités d'amortissement (102, 104) ne peuvent plus absorber les fluctuations de couple ;
l'unité de limitation (106) comprenant :
deux éléments de friction (115, 116) fixés sur les deux côtés du premier élément rotatif (117) ;
une plaque de couverture (111) en contact par pression coulissant avec l'un des éléments de friction (116) ;
une plaque de pression (113) en contact par pression coulissant avec l'autre des éléments de friction (115) ;
un ressort Belleville (114) qui sollicite la plaque de pression (113) en direction de la plaque de couverture (111) ;
une plaque de support (110) qui supporte le ressort Belleville (114) ; et
au moins un rivet (112) qui raccorde entre elles la plaque de couverture (111) et la plaque de support (110) ;
la plaque de pression (113) comprenant une troisième protubérance (113a) s'étendant en direction d'un côté périphérique externe à partir d'une face d'extrémité périphérique externe ; et
la plaque de couverture (111) et/ou la plaque de support (110) comprenant une découpe entrant en prise de manière axialement mobile et non rotative avec la troisième protubérance (113a).

11. Dispositif d'absorption de fluctuation de couple comprenant :
au moins une première unité d'amortissement (3) qui absorbe des fluctuations de couple provoquées par une torsion entre un premier élément rotatif (15, 16) et un deuxième élément rotatif (18, 25, 26) ; et
au moins une seconde unité d'amortissement (2) qui absorbe des fluctuations de couple provoquées par une torsion entre le deuxième élément rotatif (18, 25, 26) et un troisième élément rotatif (27) ;
l'au moins une première unité d'amortissement (3) comprenant une pluralité de premiers ressorts hélicoïdaux (19) agencés selon un premier espacement prédéterminé le long d'une direction circonférentielle ; l'au moins une première unité d'amortissement (3) amortissant une torsion entre les premier et deuxième éléments rotatifs (15, 16, 18, 25, 26) par la pluralité de premiers ressorts hélicoïdaux (19) ;
l'au moins une seconde unité d'amortissement (2) étant agencée plus radialement vers l'intérieur que l'au moins une première unité d'amortissement (3), et comprenant une pluralité de deuxièmes ressorts hélicoïdaux (28, 29) agencés selon un second espacement prédéterminé le long d'une direction circonférentielle ; l'au moins une seconde unité d'amortissement (2) amortissant une torsion entre les deuxième et troisième éléments rotatifs (18, 25, 26, 27) par la pluralité de deuxièmes ressorts hélicoïdaux (28, 29) ;
des positions de la pluralité de premiers ressorts hélicoïdaux (19) étant décalées selon un angle prédéterminé le long de la direction circonférentielle par rapport à des positions de la pluralité de deuxièmes ressorts hélicoïdaux (28, 29) ;
dans lequel,
la première unité d'amortissement (3) comprend au moins un premier ressort hélicoïdal (19) et au moins un troisième ressort hélicoïdal (21) présentant des longueurs différentes ;
l'au moins un premier ressort hélicoïdal (19) et l'au moins un troisième ressort hélicoïdal (21) étant alternativement agencés le long de la direction circonférentielle de la première unité d'amortissement (3) ; le premier ressort hélicoïdal (19) et le troisième ressort hélicoïdal (21) amortissant la torsion entre le premier élément rotatif (15, 16) et le deuxième élément rotatif (18, 25, 26) ;
l'au moins un troisième ressort hélicoïdal (21) présentant une longueur plus courte que l'au moins un premier ressort hélicoïdal (19) ; par rapport à la direction radiale de l'au moins une première unité d'amortissement (3), une partie de l'au moins un troisième ressort hélicoïdal (21) disposée vers l'intérieur étant disposée plus radialement vers l'extérieur de l'au moins une première unité d'amortissement (3) qu'une partie de l'au moins un premier ressort hélicoïdal (19) disposée vers l'intérieur ; et
par rapport à la direction circonférentielle de l'au moins une seconde unité d'amortissement (2), l'au moins un deuxième ressort hélicoïdal (28, 29) étant disposé entre l'au moins un premier ressort hélicoïdal (19) et l'au moins un troisième ressort hélicoïdal (21) voisins l'un de l'autre ; l'au moins un deuxième ressort hélicoïdal (28, 29) étant disposé plus radialement vers l'intérieur de l'au moins une première unité d'amortissement (3) que l'au moins un premier ressort hélicoïdal (19) et l'au moins un troisième ressort hélicoïdal (21) ;
le dispositif d'absorption de fluctuation de couple comprenant en outre :
une paire de premiers éléments de siège (22) agencés au niveau des deux extrémités longitudinales de l'au moins un troisième ressort hélicoïdal (21) ; les premiers éléments de siège (22) étant retenus par l'un des premier et deuxième éléments rotatifs (15, 16, 18, 25, 26) en cas de torsion entre les premier et deuxième éléments rotatifs (15, 16, 18, 25, 26) ;
un élément élastique (23) disposé à l'intérieur du troisième ressort hélicoïdal (21) ; et
l'élément élastique (23) permettant une torsion entre les premier et deuxième éléments rotatifs (15, 16, 18, 25, 26) jusqu'à la butée de ceux-ci avec la paire de premiers éléments de siège (22) en cas de torsion entre les premier et deuxième éléments rotatifs (15, 16, 18, 25, 26).

12. Dispositif d'absorption de fluctuation de couple selon la revendication 11, dans lequel
l'au moins une seconde unité d'amortissement (2) comprend quatre des deuxièmes ressorts hélicoïdaux (28, 29) ;
l'au moins une première unité d'amortissement (3) comprend deux des premiers ressorts hélicoïdaux (19) et deux des troisièmes ressorts hélicoïdaux (21) ;
les deux premiers ressorts hélicoïdaux (19) étant agencés décalés à 180 ° l'un par rapport à l'autre autour de l'axe de rotation comme centre ;
les deux troisièmes ressorts hélicoïdaux (21) étant agencés décalés à 180 ° l'un par rapport à l'autre autour de l'axe de rotation comme centre ; et
les premiers ressorts hélicoïdaux (19) étant agencés décalés à 90 ° des troisièmes ressorts hélicoïdaux (21) autour de l'axe de rotation comme centre.

13. Dispositif d'absorption de fluctuation de couple selon la revendication 11 ou 12, dans lequel
le deuxième élément rotatif (18, 25, 26) comprend un élément de bague (25, 26) supportant les deuxièmes ressorts hélicoïdaux (28, 29) et un élément de bride (18) entrant en prise avec l'élément de bague (25, 26) ; et
le troisième élément rotatif comprenant un élément de plaque (27) en prise amovible avec l'au moins un deuxième ressort hélicoïdal (28, 29).

14. Dispositif d'absorption de fluctuation de couple selon la revendication 13, dans lequel
les deuxièmes ressorts hélicoïdaux (28, 29) sont agencés entre l'élément de bague (25, 26) et l'élément de plaque (27).

15. Dispositif d'absorption de fluctuation de couple selon l'une quelconque des revendications 10 à 14, comprenant en outre :
une paire de seconds éléments de siège (20) agencés sur les deux extrémités de l'au moins un premier ressort hélicoïdal (28, 29) ; les seconds éléments de siège (20) étant retenus par le premier élément rotatif (15, 16) ou le deuxième élément rotatif (18, 25, 26) lorsqu'une torsion s'est produite entre les premier et deuxième éléments rotatifs (15, 16, 18, 25, 26) ; et
chaque second élément de siège (20) comprenant une protubérance (20a) s'étendant dans l'intérieur de l'au moins un premier ressort hélicoïdal (19) ; en cas de torsion entre les premier et deuxième éléments rotatifs (15, 16, 18, 25, 26), la torsion étant permise entre les premier et deuxième éléments rotatifs (15, 16, 18, 25, 26) jusqu'à ce que les protubérances (20a) viennent buter l'une contre l'autre.

16. Dispositif d'absorption de fluctuation de couple selon l'une quelconque des revendications 10 à 15, dans lequel,
chacun des deuxièmes ressorts hélicoïdaux de la pluralité de deuxièmes ressorts hélicoïdaux (28, 29) est formé d'au moins un 21^{ème} ressort hélicoïdal et d'au moins un 22^{ème} ressort hélicoïdal présentant des longueurs différentes ;
l'au moins un 22^{ème} ressort hélicoïdal présentant une longueur plus courte que le 21^{ème} ressort hélicoïdal ;
dans l'au moins une seconde unité d'amortissement (2), seul l'au moins un 21^{ème} ressort hélicoïdal est fonctionnel pour une torsion initiale entre les deuxième et troisième éléments rotatifs (18, 25, 26, 27) ; pour une torsion ultérieure entre les deuxième et troisième éléments rotatifs (18, 25, 26, 27), les au moins un 21^{ème} ressort hélicoïdal et 22^{ème} ressort hélicoïdal sont fonctionnels.

17. Dispositif d'absorption de fluctuation de couple selon l'une quelconque des revendications 1 à 16, dans lequel,
le deuxième ressort hélicoïdal (28, 29) s'étend linéairement par rapport à une direction longitudinale du deuxième ressort hélicoïdal (28, 29).
